# FASCICULE DE BREVET EUROPEEN

(11) **EP 0 877 765 B1**
(45) Date de publication et mention de la délivrance du brevet: **13.09.2000**
(21) Numéro de dépôt: 97902409.8
(22) Date de dépôt: 30.01.1997
(51) Int. Cl.: C08F 290/04, C09D 151/00, C08G 81/02

(54) **COPOLYMERES GREFFES, LEUR PROCEDE DE PREPARATION, LES COMPOSITIONS LES CONTENANT ET LEUR UTILISATION POUR LA PREPARATION DE DISPERSIONS PIGMENTAIRES EN MILIEU AQUEUX ET/OU ORGANIQUE**
PFROPFCOPOLYMERE, VERFAHREN ZU DEREN HERSTELLUNG, ZUSAMMENSETZUNGEN DIE SIE ENTHALTEN UND IHRE VERWENDUNG ZUR HERSTELLUNG VON WÄSSRIGEN UND/ODER ORGANISCHEN PIGMENTDISPERSIONEN
GRAFT COPOLYMERS, METHOD FOR PREPARING SAME, COMPOSITIONS CONTAINING SAID COPOLYMERS, AND USE THEREOF FOR PREPARING PIGMENT DISPERSIONS IN AQUEOUS AND/OR ORGANIC MEDIA

(30) Priorité: 30.01.1996 FR 9601368
(43) Date de publication de la demande: 18.11.1998
(73) Titulaire: LES PEINTURES JEFCO, 13012 Marseille (FR)
(72) Inventeur: LEGRAND, Pierre, F-13540 Puyricard (FR); RIESS, Gérard, F-68100 Mulhouse (FR); LERCH, Jean-Philippe, F-68520 Burnhaupt-le-Bas (FR); LEFEVRE, Daniel, F-13400 Aubagne (FR)
(74) Mandataire: Domange, Maxime
(86) Numéro de dépôt international: FR9700185
(87) Numéro de publication internationale: WO9728200

(56) Documents cités:
- EP-A- 0 251 751
- GB-A- 1 496 931
- US-A- 4 279 795
- US-A- 4 659 781
- US-A- 5 231 131
- JOURNAL OF POLYMER SCIENCE, POLYMER CHEMISTRY EDITION, vol. 27, no. 10, 1 Septembre 1989, pages 3521-3530, XP000104200 MITSURU AKASHI ET AL: "GRAFT COPOLYMERS HAVING HYDROPHOBIC BACKBONE AND HYDROPHILIC BRANCHES. IV A COPOLYMERIZATION STUDY OF WATER-SOLUBLE OLIGOVINYLPYRROLIDONE MACROMONOMERS"
- MAKROMOLEKULARE CHEMIE, vol. 186, 1985, pages 261-271, XP002016661 BONARDI ET AL: "Synthèse et copolymérisation avec l'acrylamide de macromères d'acrylate de dodécyle"

## Description

L'invention concerne des copolymères greffés comprenant au moins trois séquences de nature chimique distincte, parmi lesquelles une ou plusieurs séquence(s) d'ancrage sur des particules solides, une ou plusieurs séquence(s) à caractère hydrophobe et une ou plusieurs séquence(s) à caractère hydrophile.

L'invention concerne également leur procédé de préparation, les compositions les contenant, leur utilisation en tant qu'agent dispersant, stabilisant de particules solides et/ou émulsifiant dans un milieu aqueux et/ou organique, ainsi que leur utilisation pour la préparation de dispersions pigmentaires en milieu aqueux et/ou organique.

Au terme de leur procédé de fabrication, les particules solides utilisées dans l'industrie des encres et des peintures, pigments et charges essentiellement, se présentent sous la forme d'agrégats ou d'agglomérats. Leur incorporation dans un liquide, afin d'obtenir une suspension stable, nécessite donc au préalable une étape de dispersion, étape au cours de laquelle ces assemblages sont dissociés en particules élémentaires sous l'effet d'importantes contraintes mécaniques.

L'action de ces forces mécaniques ne saurait cependant être efficace en l'absence d'un agent dispersant.

Ces copolymères, mis en oeuvre en solution par adsorption à la surface du solide, ou par enrobage de la particule avant son incorporation dans le liquide, interviennent à chaque étape de la dispersion.

Dans un premier temps, ils assurent un bon mouillage de la particule par la phase continue, en remplaçant le film d'air entourant la surface du solide par des molécules de liquide. Ensuite, ils améliorent sensiblement le rendement du dissolveur/broyeur lors de la phase de désagglomération des associats. Enfin, ces agents de dispersion, adsorbés à la surface du solide, constituent une couche de polymère solvatée, à l'origine de forces de répulsion stériques, ainsi que, dans le cas de polyélectrolytes en milieu aqueux, de forces de répulsion électrostatiques, qui s'opposent aux forces attractives de Van der Waals, assurant ainsi la stabilité de la dispersion.

Pour être efficace, un copolymère utilisable en tant que dispersant doit donc comporter une séquence d'ancrage, présentant une bonne affinité pour la surface des particules, ainsi qu'une ou plusieurs séquence(s) compatible(s) avec la phase continue dans laquelle ces solides sont incorporés.

En l'absence d'un de ces constituants, ou en cas de désorption du dispersant, on assiste à la floculation du système, phénomène qui se manifeste par la réagglomération des particules, et une augmentation de viscosité de la dispersion. Dans le cas particulier d'une peinture, une mauvaise dispersion des pigments au sein du liant se traduit par des écarts colorimétriques et une perte de brillant importants sur le film final.

Pour s'affranchir de ces problèmes, des agents de dispersion ont été proposés, qui permettent de formuler des peintures spécifiquement en milieu aqueux (EP 018 099) ou en milieu organique (U.S 4, 032, 698; GB 1 393 401 et 1 393 402). Ces produits n'offrent cependant qu'une solution partielle, dans la mesure où le mélange de différents pigments, minéraux et organiques, ou des interactions entre le dispersant et la phase continue, comme cela peut être le cas dans des laques, entraînent une perte de stabilité de la suspension.

La synthèse de nouveaux additifs, contenant plusieurs séquences, reposant sur l'utilisation de polyisocyanates, telle que décrite dans les brevets U.S 4,647,647 ou EP 0 520 586 permet de pallier ces difficultés. Néanmoins, la mise en oeuvre de polyisocyanates, molécules présentant une forte toxicité et une fonctionnalité mal définie, conduit à l'obtention d'un produit constitué d'un mélange de structures diverses, dont les propriétés d'adsorption et de dispersion ne sont pas optimales. En outre, ce procédé interdit la présence dans le copolymère de fonctions polaires contenant un atome d'hydrogène réactif, fonctions chimiques appréciées lors d'une utilisation en milieu aqueux, ou pour favoriser la compatibilité avec les résines.

Par ailleurs, des copolymères monogreffés, obtenus par la technique "macromonomère" et/ou greffage de télomères de type polyéther sur une chaîne préformée constituée d'un ou plusieurs monomère(s) éthylénique(s) insaturé(s) et comportant des motifs azotés font l'objet du brevet EP 0 311 157.

Les copolymères de la présente invention contiennent une séquence permettant leur ancrage sur les particules solides , notamment pigments et charges, ainsi qu'au moins 2 séquences à caractère respectivement hydrophile et hydrophobe, autorisant leur emploi dans les compositions en milieu aqueux et/ou organique. La présence d'une séquence insoluble en milieu sélectif augmente de manière surprenante la quantité de dispersant adsorbée à la surface des particules, évitant ainsi le phénomène de floculation lors du mélange de différents pigments.

D'autre part, la pluralité de fonctions chimiques au sein d'un même copolymère, ainsi que la possibilité de formuler des concentrés pigmentaires sans résine d'allongement, améliorent la compatibilité avec les résines, autorisant ainsi la formulation de peintures à partir d'une large gamme de liants.

De plus, le procédé de synthèse permet d'obtenir des produits de structure homogène, dont les performances ne sont pas limitées par la présence de contaminants.

L'invention a donc pour objet un copolymère greffé comprenant au moins trois séquences de nature chimique distincte, parmi lesquelles une ou plusieurs séquence(s) d'ancrage sur les particules solides, une ou plusieurs séquence(s) à caractère hydrophobe et une ou plusieurs séquence(s) à caractère hydrophile, constitué de :
1/ 1 à 80 % massique, de préférence 5 à 40 % massique, d'une ou plusieurs séquence(s) d'ancrage sur les particules solides, constituée(s) par une chaîne hydrocarbonée, linéaire ou ramifiée, cycloalkyle ou aromatique, comportant des groupements azotés basiques de type : hétérocycliques, -NH₂,-NH-, -NHR, -NR₂, -CONH₂, -CONHR, -CONR₂ (où R est un radical (C₁-C₆) alkyle, optionnellement substitué par un ou plusieurs groupement(s) -OH,-COO-, -CO-, -O-, -SO₃H), pouvant comporter des groupements -COO-, et dont la masse moléculaire est comprise entre 150 et 10000, de préférence entre 300 et 3000, la teneur massique en monomères azotés basiques dans la chaîne d'ancrage étant au minimum de 5 %, et de préférence de 30 %, et
2/ au moins 10 % massique, de préférence 25 à 80 % massique, d'une ou plusieurs séquence(s) à caractère hydrophobe, constituée(s) par une chaîne hydrocarbonée, linéaire ou ramifiée, cycloalkyle ou aromatique, pouvant comporter des groupements -COO-, -S-, -F,-Si(OR')ₙ(R")₂₋ₙ- (où R' et R" représentent des radicaux alkyles ou aryles, semblables ou différents, en C₁-C₁₀, et n = 0 à 2), formée(s) d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
3/ au moins 10 % massique, de préférence 15 à 70 % massique, d'une ou plusieurs séquence(s) à caractère hydrophile, constituée(s) par une chaîne hydrocarbonée, linéaire ou ramifiée, comportant des groupements -O-, -OH, -NCO-, -COO-, -COOH, -CONH₂, -CONHR"' (où R"' est un radical (C₁-C₃) alkyle), -NH-, -S-, -SO₃H, formée(s) d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000.

On notera que, de manière avantageuse, il existe trois manières différentes de combiner les trois types de séquences : d'ancrage, hydrophobe et hydrophile. Les copolymères greffés selon l'invention peuvent donc présenter alternativement les structures suivantes :
- chaîne principale d'ancrage + au moins 2 greffons respectivement hydrophile(s) et hydrophobe(s)
- chaîne principale hydrophobe + au moins 2 greffons respectivement hydrophile(s) et d'ancrage
- chaîne principale hydrophile + au moins 2 greffons respectivement hydrophobe(s) et d'ancrage.

Les copolymères greffés comprenant une chaîne principale d'ancrage et au moins 2 greffons respectivement hydrophile(s) et hydrophobe(s) sont des composés préférés selon l'invention.

Selon un aspect préféré, l'invention concerne un copolymère greffé tel que défini ci-dessus comprenant au moins trois séquences de nature chimique distincte, dans lequel la chaîne principale est une séquence d'ancrage sur les particules solides constituée par une chaîne hydrocarbonée, linéaire ou ramifiée, cycloalkyle ou aromatique, comportant des groupements azotés basiques de type : hétérocycliques, -NH₂, -NH-, -NHR, -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H), pouvant comporter des groupements -COO-, et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %.

De manière avantageuse, l'invention concerne également un copolymère greffé tel que défini ci-dessus, dans lequel la chaîne principale est une séquence à caractère hydrophobe constituée par une chaîne hydrocarbonée, linéaire ou ramifiée, cycloalkyle ou aromatique, pouvant comporter des groupements -COO-, -S-, -F,-Si(OR')ₙ(R")₂₋ₙ- (où R' et R" représentent des radicaux alkyles ou aryles, semblables ou différents, en C₁-C₁₀, et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500.

D'autres copolymères greffés préférés sont des produits tels que définis ci-dessus, dans lesquels la chaîne principale est une séquence à caractère hydrophile, constituée par une chaîne hydrocarbonée, linéaire ou ramifiée, comportant des groupements -O-, -OH, -NCO-, -COO-, -COOH, -CONH₂, -CONHR"' (où R"' est un radical (C₁-C₃) alkyle), -SO₃H, formée d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000.

Les paramètres de solubilité exprimés en J^{1/2}/cm^{3/2}, ont été calculés par la méthode d'incrémentation d'Hoftyzer-Van Krevelen ou mesurés expérimentalement (cas du polydiméthylsiloxane). Les volumes molaires nécessaires lors du calcul des paramètres de solubilité sont calculés à partir des données de Feedor. Ces méthodes de calcul et valeurs expérimentales sont exposées dans l'ouvrage : D.W. VAN KREVELEN, "Properties of polymers. Their correlation with chemical structure ; their numerical estimation and prediction from additive group contributions", Third edition, Elsevier, 1990, p. 189-225.

L'invention concerne également ledit copolymère sous forme d'un de ses sels, obtenu par quaternisation ou neutralisation des fonctions basiques.

L'invention concerne également les procédés de préparation des copolymères greffés définis ci-dessus.

La synthèse des copolymères greffés selon l'invention est basée sur l'utilisation de la technique "macromonomère" et/ou le greffage de télomères fonctionnalisés sur une chaîne linéaire ou greffée préformée.

Ainsi ces dispersants peuvent être préparés par copolymérisation radicalaire d'un ou plusieurs macromonomère(s) hydrophile(s) et d'un ou plusieurs macromonomère(s) hydrophobe(s) avec un ou plusieurs comonomère(s) azoté(s) et optionnellement avec un ou plusieurs comonomère(s) éthylénique(s) insaturé(s) et/ou comonomère(s) éthylénique(s) insaturé(s) réactif(s).

Ces synthèses sont réalisées sous atmosphère inerte en présence d'un solvant ou d'un mélange de solvants approprié, c'est-à-dire dans lesquels les réactifs, macromonomères, comonomères soient totalement solubles et les produits finaux soient totalement ou au moins partiellement solubles. Ces solvants seront notamment choisis parmi des hydrocarbures aromatiques tels que le toluène ou le xylène ; des éthers tels que la dioxane ou le tétrahydrofuranne; des cétones telles que l'acétone ou la méthyléthylcétone; des esters tels que l'acétate d'éthyle ou l'acétate de butyle. On utilisera de préférence la dioxane ou le tétrahydrofurane lors de la préparation des copolymères greffés.

La synthèse débute par la préparation des macromonomères, par télomérisation puis fixation d'une double liaison en bout de chaîne, étape suivie de la copolymérisation desdits macromonomères avec les comonomères.

On peut également préparer les copolymères greffés selon l'invention en fixant une ou plusieurs molécule(s) fonctionnalisée(s), l'un des deux types de greffons hydrophile ou hydrophobe, voire les deux types de greffons, sur un polymère préformé à l'aide de monomères réactifs, cette chaîne pouvant déjà contenir un ou plusieurs greffon(s) hydrophile(s) ou hydrophobe(s) incorporés par voie radicalaire. Dans ce cas le déroulement de la réaction impose l'utilisation d'au moins deux réacteurs distincts, le premier servant à la préparation de la chaîne principale, le second destiné à la préparation du télomère.

Le greffage de ces chaînes latérales sur le polymère préformé peut alors être réalisé en ajoutant le contenu du ou des réacteurs contenant les télomères au premier. Il peut être avantageux de réaliser cette addition en plusieurs étapes, afin d'ajuster au mieux les propriétés du copolymère final.

L'invention concerne également des compositions contenant un ou plusieurs copolymère(s) greffé(s) tel(s) que défini(s) ci-dessus, au moins un pigment et/ou une charge et/ou un solide fibreux, et optionnellement un solvant organique et/ou de l'eau.

L'invention a également pour objet un pigment ou une charge ou un solide fibreux enrobé à partir de compositions contenant un ou plusieurs copolymère(s) greffé(s) tel(s) que défini(s) ci-dessus.

L'invention concerne enfin l'utilisation desdits copolymère(s) en tant qu'agents dispersants, stabilisants de particules solides ou émulsifiants dans un milieu aqueux et/ou organique, leur utilisation pour la préparation de dispersions pigmentaires en milieu aqueux et/ou organique ainsi que les peintures et les encres les contenant.

### Description de la séquence d'ancrage sur les particules solides

Les copolymères greffés selon l'invention possèdent, répartis le long de leur séquence d'ancrage des groupements azotés basiques, disposés de manière statistique et choisis pour leur affinité avec la surface de nombreux pigments et charges, aussi bien organiques que minéraux.

Lesdits groupements basiques peuvent être définis par leur pKa, compris entre 2 et 14, de préférence entre 5 et 14, en particulier entre 5 et 12. Les mesures de pKa sont effectuées à 25 °C dans 1' eau à une concentration de 0,01 molaire.

L'invention concerne donc notamment selon l'un de ses aspects un copolymère greffé tel que défini plus haut dans lequel la ou les séquence(s) d'ancrage comprend ou comprennent des groupements azotés basiques introduits à partir d'un ou plusieurs composé(s) choisi(s) par exemple parmi :
a) - les vinylpyridines, telles que 2-vinylpyridine, 3-vinylpyridine, 4-vinylpyridine ou 2-méthyl-5-vinylpyridine,
   - la vinylimidazole, la 2-méthyl-N-vinylimidazole, la vinylcarbazole, la N-vinylpyrrolidone, la 3-méthyl-N-vinylpyrazole, la 4-méthyl-5-vinylthiazole, la N-vinylcaprolactame, le méthacrylate d'éthylimidazolidone,
   - les (méth)acrylamides telles que (méth)acrylamide, N-méthylacrylamide, N-isopropylacrylamide et N,N-diméthylacrylamide,
   - la N-méthylol(méth)acrylamide, la N,N-diméthylol(méth)acrylamide, l'acide 2-acrylamido-2-méthyl-1-propanesulfonique, la diacétone acrylamide, la méthyl-2-acrylamido-2-méthoxyacétate, la N-tris(hydroxyméthyl) méthylacrylamide,
   - les aminoalkyl(méth)acrylates de formule suivante : 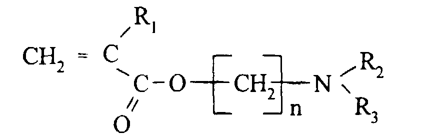 où R₁ est un atome d'hydrogène ou un radical (C₁-C₄) alkyle ; R₂ et R₃ identiques ou différents représentent chacun un radical (C₁-C₆) alkyle, n = 0 à 6, lesdits groupements azotés étant dans ce premier cas introduits par copolymérisation radicalaire d'un ou plusieurs monomère(s) éthylénique(s) insaturé(s) cité(s) ci-dessus,
   et
b) - la N-N-diéthyl-1,4-butanediamine, la 1-(2-aminoéthyl)-pipérazine, la 2-(1-pyrrolidyl)-éthylamine, la 4-amino-2-méthoxy-pyrimidine, le 2-diméthylamino-éthanol, la 1-(2-hydroxyéthyl)-pipérazine, la 4-(2-hydroxyéthyl)-morpholine, la 2-mercaptopyrimidine, la 2-mercaptobenzimidazole, la N,N-diméthyl-1,3-propanediamine, la 4-(2-aminoéthyl)-pyridine, la N-N-diallyl-mélamine, le 3-amino-1,2,4-triazole, le 1-(3-aminopropyl)-imidazole, la 4-(2-hydroxyéthyl)-pyridine, le 1-(2-hydroxyéthyl)-imidazole, le 3-mercapto-1,2,4-triazole,
lesdits groupements azotés étant dans ce second cas fixés sur un copolymère, linéaire ou greffé, en mettant à profit des fonctions réactives introduites le long de la chaîne préformée.

Parmi les composés a), on utilisera de préférence les monomères de type vinylpyridine, vinylimidazole, (méth)acrylamide N,N-diméthylacrylamide et méthacrylate de 2-diméthylaminoéthyle.

Les composés b) cités ci-dessus sont de préférence greffés directement sur le copolymère à partir de fonctions chimiques réactives incorporées par copolymérisation radicalaire d'un ou plusieurs monomère(s) éthylénique(s) insaturé(s) réactif(s) contenant un ou plusieurs groupement(s) comportant au moins un atome d'hydrogène réactif vis-à-vis de fonctions comme par exemple le groupement époxy, choisi(s) parmi -OH, -SH, -COOH, -NH₂, -NHR (où R est un radical alkyle possédant de 1 à 3 atomes de carbone).

On peut utiliser par exemple :
- des composés hydroxylés : (méth)acrylate de 2-hydroxyéthyle, (méth)acrylate de 2- ou 3-hydroxypropyle, (méth)acrylate de 4-hydroxybutyle,
- des composés carboxylés : acide (méth)acrylique, acide maléique, acide fumarique, acide itaconique, acide crotonique, anhydride maléique,
- des monomères portant une fonction époxy : méthacrylate de glycidyle.

On utilisera de préférence des monomères portant des fonctions hydroxy et époxy, et plus particulièrement les (méth)acrylates d'hydroxyéthyle, (méth)acrylates d'hydroxypropyle et méthacrylate de glycidyle.

La proportion des monomères réactifs contenus dans le copolymère se situe entre 0 et 80 % massique, préférentiellement entre 0 et 40 % massique.

Il est souvent intéressant également de copolymériser un ou plusieurs monomère(s) éthylénique(s) insaturé(s) neutre(s) avec le ou les monomère(s) azoté(s) a) cité(s) plus haut et/ou le ou les monomère(s) réactif(s) permettant le greffage des composés b) cités ci-dessus.

En effet, ces monomères, s'ils n'influencent pas directement les capacités dispersantes et stabilisantes du copolymère, permettent de modifier favorablement certaines de ses propriétés, comme par exemple sa température de transition vitreuse, sa stabilité ou encore ses propriétés mécaniques.

Ces monomères seront par exemple des esters d'acide acrylique ou méthacrylique, des esters vinyliques, des styréniques ou des alkylstyréniques.

La teneur en monomères éthyléniques insaturés neutres dans le copolymère final peut varier de 0 à 76 % massique, et notamment de 0 à 28 % massique.

Les monomères éthyléniques insaturés introduisant les composés a), les monomères éthyléniques insaturés réactifs utilisés pour greffer les composés b) et les monomères éthyléniques insaturés neutres décrits ci-dessus ainsi que les macromonomères hydrophiles et hydrophobes sont copolymérisés par voie radicalaire à partir des amorceurs habituellement utilisés, par exemple les peroxydes organiques, les systèmes redox, ou de préférence les composés azoïques.

### Description de la séquence à caractère hydrophobe

La ou les séquence(s) à caractère hydrophobe sont choisie(s) de telle sorte que leurs propriétés de solubilité soient complémentaires de celles de la ou des séquence(s) à caractère hydrophile mentionnée(s) ci-après, afin de conférer au copolymère bigreffé son caractère de dispersant universel vis-à-vis des solvants et des liants.

Les polymères organosolubles formés d'unités monomères dont le paramètre de solubilité inférieur ou égal à 21,5 J^{1/2}/cm^{3/2}, de préférence inférieur à 19 J^{1/2}/cm^{3/2}, constituent ces séquences à caractère hydrophobe et permettent de disperser les particules en milieu apolaire. L'incorporation de ce(s) séquence(s) ou greffon(s) dans le copolymère peut être effectuée en copolymérisant par voie radicalaire un ou plusieurs macromonomère(s) organosoluble(s) avec un ou plusieurs comonomère(s) éthylénique(s) insaturé(s) mentionné(s) plus haut dans la description de la séquence d'ancrage, à savoir un ou plusieurs monomère(s) éthylénique(s) azoté(s), optionnellement un ou plusieurs monomère(s) éthylénique(s) insaturé(s) neutre(s) et au moins un macromonomère à caractère hydrophile décrit ci-dessous (à partir des amorceurs habituellement utilisés, par exemple les peroxydes organiques, les systèmes redox, ou de préférence les composés azoïques), et conduira à la formation d'un copolymère bigreffé.

Ces greffons à caractère hydrophobe peuvent également être fixés par greffage sur un copolymère linéaire ou ramifié constitué d'un ou plusieurs monomère(s) éthylénique(s) insaturé(s) cité(s) plus haut dans la description de la séquence d'ancrage, à savoir un ou plusieurs monomère(s) a) et/ou un ou plusieurs monomère(s) éthylénique(s) insaturé(s) réactif(s) utilisé(s) pour greffer les composés b) sur le copolymère et/ou un ou plusieurs monomère(s) éthylénique(s) insaturé(s) neutre(s) et/ou un ou plusieurs macromonomère(s) à caractère hydrophile décrits ci-dessous et/ou à caractère hydrophobe, à partir d'un ou plusieurs télomère(s) à caractère hydrophobe.

Les télomères à caractère hydrophobe pourront être greffés directement sur le copolymère à l'aide des groupements réactifs selon le procédé décrit plus haut pour la séquence d'ancrage.

Selon l'invention, les unités monomère constituant les macromonomères et télomères utilisés pour préparer la ou les séquence(s) à caractère hydrophobe seront par exemple introduites à partir des composés suivants :
- les esters d'acide (méth)acrylique tels que (méth)acrylate de méthyle, (méth)acrylate d'éthyle, (méth)acrylate de propyle, (méth)acrylate de butyle, (méth)acrylate d'hexyle, (méth)acrylate de cyclohexyle, (méth)acrylate d'éthylhexyle, (méth)acrylate d'octyle, (méth)acrylate de nonyle, (méth)acrylate d'isodécyle, (méth)acrylate de lauryle, (méth)acrylate de stéaryle, (méth)acrylate de pentadécyle, (méth)acrylate de cétyle, (méth)acrylate de béhényle, (méth)acrylate de 3-(triméthoxysilyl)propyle,
- les esters vinyliques tels que acétate de vinyle, propionate de vinyle, butyrate de vinyle, sorbate de vinyle, hexanoate de vinyle, éthylhexanoate de vinyle, laurate de vinyle, stéarate de vinyle,
- le styrène et les alkylstyrènes tels que α-méthylstyrène, vinyltoluène, tertiobutylstyrène,
- les diènes tels que butadiène, isoprène, pouvant être hydrogénés après polymérisation,
- les alkylènes tels que éthylène, propylène,
- les siloxanes tels que diméthylsiloxane, diphénylsiloxane, méthylphénylsiloxane,
- les composés fluorés tels que (méth)acrylate de trifluoroéthyle), (méth)acrylate de pentafluoropropyle, (méth)acrylate d'heptafluorobutyle, (méth)acrylate d'octafluoropentyle, (méth)acrylate de pentadécafluorooctyle, (méth)acrylate d'eicosafluoroundécyle, fluorure de vinyle, tétrafluoroéthylène.

Les produits de polycondensation, polyesters ou polyamides, tels que ceux préparés à partir soit de diacides et de diols à longues chaînes alkyles, soit d'hydroxyacides à longues chaînes alkyles (pour les polyesters), ou à partir soit de diacides et de diamines à longues chaînes alkyles, soit d'aminoacides à longues chaînes alkyles (pour les polyamides) pourront également constituer les télomères et macromonomères utilisés.

De préférence, on préparera les copolymères greffés selon l'invention par copolymérisation radicalaire à partir d'un ou plusieurs macromonomère(s), dont les unités constitutives sont choisies de préférence parmi les esters d'acide (méth)acrylique ou esters vinyliques comportant au moins 8 atomes de carbone, ainsi que les styréniques et alkylstyréniques tels que le styrène et le tertiobutylstyrène, et les monomères fluorés, en particulier le méthacrylate de trifluoroéthyle, et synthétisés par télomérisation à partir d'un agent de transfert de chaîne, puis condensation sur un monomère (méth)acrylique, vinylique ou allylique, de préférence (méth)acrylique.

La masse moléculaire des greffons hydrophobes obtenus par cette technique est comprise entre 250 et 10 000, et sera avantageusement comprise entre 500 et 3 500.

D'autre part la teneur massique en greffons hydrophobes dans le copolymère bigreffé final est d'au moins 10, et de préférence comprise entre 25 et 80 %.

### Description de la séquence à caractère hydrophile

La ou les séquence(s) à caractère hydrophile, répartie(s) de manière statistique le long de la chaîne principale du copolymère, sont à l'origine de la solubilité des copolymères dans l'eau. Ce sont ces séquences qui stabilisent les dispersions de particules en milieu aqueux.

Le paramètre de solubilité des unités monomères constituant ces greffons est supérieur ou égal à 22 J^{1/2}/cm^{3/2}, de préférence supérieur à 22,5 J^{1/2}/cm^{3/2}.

L'introduction de ces chaînes latérales dans le copolymère peut être réalisée en utilisant un ou plusieurs macromonomère(s) à caractère hydrophile. Un macromonomère de ce type se compose d'un polymère hydrosoluble terminé à l'une de ses extrémités par un groupement polymérisable de manière radicalaire. Ce groupement peut être par exemple de type (méth)acrylique, vinylique ou allylique, de préférence (méth)acrylique.

La copolymérisation d'un ou plusieurs de ces macromonomère(s) avec un ou plusieurs comonomère(s) éthylénique(s) insaturé(s) mentionné(s) plus haut dans la description de la séquence d'ancrage, à savoir un ou plusieurs composé(s) a) un ou plusieurs monomère(s) éthylénique(s) insaturé(s) neutre(s), et au moins un macromonomère à caractère hydrophobe décrit ci-dessus (à partir des amorceurs habituellement utilisés, par exemple les peroxydes organiques, les systèmes redox, ou de préférence les composés azoïques) conduira à la formation d'un copolymère bigreffé selon l'invention.

Ces greffons à caractère hydrophile peuvent également être fixés par greffage sur un copolymère linéaire ou ramifié constitué d'un ou plusieurs monomère(s) éthylénique(s) insaturé(s) cité(s) plus haut dans la description de la séquence d'ancrage, à savoir un ou plusieurs monomère(s) éthylénique(s) insaturé(s) azoté(s) a) et/ou un ou plusieurs monomère(s) éthylénique(s) insaturé(s) réactif(s) utilisé(s) pour greffer les composés b) sur le copolymère et/ou un ou plusieurs monomère(s) éthylénique(s) insaturé(s) neutre(s) et/ou un ou plusieurs macromonomère(s) à caractère hydrophobe décrits ci-dessus et/ou hydrophile, à partir d'un ou plusieurs télomère(s) à caractère hydrophile.

Ces télomères sont constitués d'un polymère hydrosoluble fonctionnalisé en bout de chaîne par un groupement contenant un atome d'hydrogène réactif, -OH, -NH₂, -NHR (où R est un radical alkyle comportant de 1 à 3 atomes de carbone), -COOH, -SH.

Les télomères peuvent être greffés directement sur le copolymère à partir de groupements réactifs.

Selon l'invention, les unités monomères constituant les macromonomères et télomères, utilisées pour préparer la ou les séquence(s) à caractère hydrophile seront par exemple choisies parmi :
- l'oxyde d'éthylène,
- les acides (méth)acryliques, l'acide maléique, l'acide fumarique, l'acide itaconique,
- les dérivés d'acrylamide tels que la (méth)acrylamide, la N-méthylacrylamide, la N-isopropylacrylamide,
- l'éthylèneimine,
- l'alcool vinylique,
- la vinylpyrrolidone, la vinylméthyloxazolidone,
- le vinylsulfonate,
- le méthallylsulfonate de sodium,
- le méthacrylate de glycérol.

De préférence, on prépare les copolymères greffés selon l'invention par voie radicalaire (technique "macromonomère"), à partir de macromonomères tels les : (méth)acrylates de poly(ethyleneglycol) les produits HEMA-5 et HEMA-10, commercialisés par Bimax Chemicals Ltd. La masse moléculaire des greffons à caractère hydrophile est choisie entre 250 et 10 000, et de préférence entre 300 et 3 000.

D'autre part, la teneur massique représentée par ces greffons hydrosolubles dans le copolymère final est d'au moins 10 %, et en particulier de 15 à 70 %.

Dans un aspect ultérieur, l'invention concerne également un procédé de préparation des copolymères greffés selon l'invention.

Comme mentionné plus haut, lesdits copolymères peuvent être préparés par copolymérisation radicalaire à partir de macromonomères et/ou par greffage de polymères fonctionnalisés sur une chaîne préformée, et présentent de ce fait une structure bien contrôlée.

Ce mode de synthèse offre en outre la possibilité d'ajuster la masse moléculaire de la séquence d'ancrage, afin d'augmenter le taux d'adsorption des copolymères sur les particules, aussi bien minérales qu'organiques, ainsi que celle des chaînes latérales, en améliorant leur compatibilité avec la phase continue.

Ainsi, en utilisant les copolymères greffés selon l'invention pour la préparation de concentrés pigmentaires, on atteint un état de dispersion supérieur à celui obtenu à partir des dispersants de l'art antérieur. De plus la masse moléculaire élevée des produits selon l'invention permet de préparer des concentrés pigmentaires sans résine d'allongement.

La copolymérisation radicalaire est effectuée de préférence à une température comprise entre 50 °C et 140 °C, et la réaction de greffage à une température de préférence comprise entre 20 °C et 150 °C.

Avantageusement, l'ordre d'addition des monomères lors de la copolymérisation radicalaire est le suivant :
- les macromonomères, de masse moléculaire élevée et de ce fait moins réactifs, sont incorporés dès le départ dans le réacteur, avec le solvant;
- le ou les comonomères constituant la chaîne principale, plus réactifs, sont introduits en continu au cours du temps, de manière à ce que leur concentration soit toujours faible par rapport à celle des macromonomères.

### Préparation d'un copolymère greffé dans lequel la chaîne principale est une séquence d'ancrage sur les particules solides

L'invention concerne donc selon une première variante un procédé de préparation d'un copolymère greffé tel que défini ci-dessus comprenant au moins trois séquences de nature chimique distincte, parmi lesquelles une séquence d'ancrage sur les particules solides , une ou plusieurs séquence(s) à caractère hydrophobe et une ou plusieurs séquence(s) à caractère hydrophile, dans lequel la chaîne principale est une séquence d'ancrage sur les particules solides, caractérisé en ce que l'on effectue :
1 ) la copolymérisation radicalaire de :
   i) 0 à 80 % massique, de préférence 0 à 40 % massique, d'un ou plusieurs monomère(s) comportant au moins un groupement azoté basique de type hétérocyclique, -NH₂, -NHR, -NR₂, -CONH₂, -CONHR, -CONR₂ (où R est un radical (C₁-C₆) alkyle, optionnellement substitué par un ou plusieurs groupement(s) -COO-, -CO-, -O-, -OH, -SO₃H), et
   ii) 0 à 90 % massique, de préférence 0 à 80 % massique, d'un ou plusieurs macromonomère(s) représenté(s) par la formule : 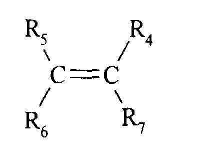 où
      R₄, R₅, R₆, identiques ou différents, représentent un atome d'hydrogène ou un radical (C₁-C₄) alkyle,
      R₇ est une séquence à caractère hydrophobe, constituée par une chaîne hydrocarbonée, linéaire ou ramifiée, cycloalkyle ou aromatique, pouvant comporter des groupements -COO-, -S-, -F, -Si(OR')ₙ(R")₂₋ₙ- (où R' et R" représentent des radicaux alkyles ou aryles, semblables ou différents, en C₁-C₁₀ , et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
   iii) 0 à 90 % massique, de préférence 0 à 70 % massique, d'un ou plusieurs macromonomère(s) représenté(s) par la formule : 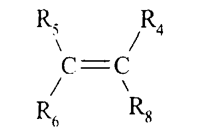 où
      R₄, R₅, R₆ sont tels que définis ci-dessus, et
      R₈ est une séquence à caractère hydrophile, constituée par une chaîne hydrocarbonée, linéaire, ou ramifiée, comportant des groupements -O-, -OH,-NCO-, -COO-, -COOH,-CONH₂, -CONHR"' (où R"' est un radical (C₁-C₃) alkyle), -NH-, -S-, -SO₃H, formée d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000, et
   iv) 0 à 80 % massique, de préférence 0 à 40 %, d'un ou plusieurs monomère(s) contenant au moins un groupement susceptible d'être engagé dans une réaction de couplage, et,
   v) 0 à 76 % massique, de préférence 0 à 28 %, d'un ou plusieurs monomère(s) éthylénique(s) insaturé(s) pouvant contenir jusqu'à 25 atomes de carbone, hormis les monomères déjà cités en i),
   étant entendu que si l'une des teneurs massiques des composés définis en i), ii) et/ou iii) est nulle, la teneur massique des composés définis en iv) est différente de 0, et
2) greffage sur cette chaîne préformée de :
   vi) 0 à 80 % massique, de préférence 0 à 40 %, d' une ou plusieurs molécule(s) dérivant d'un composé comportant au moins un groupement azoté basique hétérocyclique, -NH₂, -NHR ou -NR₂ (où R est un radical (C₁-C₆) alkyle, et contenant au moins un groupement susceptible d'être engagé dans une réaction de couplage, et
   vii) 0 à 90% massique, de préférence 0 à 80% massique, d'un ou plusieurs télomère(s) représenté(s) par la formule :

      G-R₇

      où G représente un groupement contenant un atome d'hydrogène réactif, -OH, -COOH, -SH, -NH₂, -NHR"' (où R"' est un radical (C₁-C₃) alkyle), et R₇ est tel que défini ci-dessus, et
   viii) 0 à 90 % massique, de préférence 0 à 70 %, d'un ou plusieurs télomère(s) représenté(s) par la formule

      G-R₈

      où G et R₈ sont tels que définis ci-dessus,
étant entendu que :
- les teneurs massiques des composés définis en i) et en vi) ne peuvent être simultanément égales à 0, et lorsque l'une d'entre-elles est égale à 0, alors l'autre est égale à au moins 1 % ,
- les teneurs massiques des composés définis en ii) et en vii) ne peuvent être simultanément égales à 0, et lorsque l'une d'entre-elles est égale à 0, alors l'autre est égale à au moins 10 % ,
- les teneurs massiques des composés définis en iii) et en viii) ne peuvent être simultanément égales à 0, et lorsque l'une d'entre-elles est égale à 0, alors l'autre est égale à au moins 10 % .

On prépare selon cette première variante du procédé un copolymère greffé tel que défini ci-dessus, constitué d'une chaîne principale d'ancrage sur les particules solides et d'au moins 2 greffons, respectivement hydrophobe(s) et hydrophile(s), lesdits copolymères étant des produits préférés selon l'invention.

### Préparation d'un copolymère greffé dans lequel la chaîne principale est une séquence à caractère hydrophobe

L'invention concerne également selon une seconde variante un procédé de préparation d'un copolymère greffé comprenant au moins trois séquences de nature chimique distincte, parmi lesquelles une ou plusieurs séquence(s) d'ancrage, une séquence à caractère hydrophobe et une ou plusieurs séquence(s) à caractère hydrophile, dans lequel la chaîne principale est une séquence à caractère hydrophobe, telle que définie plus haut
caractérisée en ce qu'on effectue la copolymérisation radicalaire de :
i) 10 à 90 % massique, de préférence 25 à 80 % massique, d'un ou plusieurs monomère(s) à caractère hydrophobe comportant au moins un groupement aromatique, -COO-, -F, ou -Si(OR')n(R")₂- (où R et R" représentent des radicaux alkyles ou aryles, identiques ou différents, en C₁-C₁₀, et n = 0 à 2) constituant après polymérisation une chaîne formée d' unités monomère dont le paramètre de solubilité est inférieur ou égal à 21,5 J^{1/2}/cm^{3/2} , de préférence inférieur à 19 J^{1/2}/cm^{3/2}, et dont la masse moléculaire est comprise entre 250 et 10 000, de préférence entre 500 et 3 500, et
ii) 0 à 90 % massique, de préférence 0 à 70 % massique, d'un ou plusieurs macromonomère(s) représenté(s) par la formule : 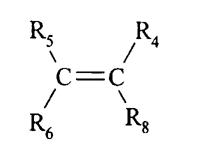 où
   R₄, R₅, R₆ sont tels que définis ci-dessus, et
   R₈ est une séquence à caractère hydrophile, constituée par une chaîne hydrocarbonée, linéaire ou ramifiée, comportant des groupements -O-, -OH, -NCO-, -COO-, -COOH , -CONH₂, -CONHR''' (où R"' est un radical (C₁-C₃) alkyle), -NH-, -S-, -SO₃H, formée d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000, et
iii) 0 à 80 % massique, de préférence 0 à 40 % massique, d'un ou plusieurs macromonomère(s) représenté(s) par la formule : 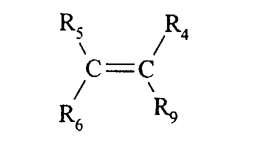 où
   R₄, R₅, R₆, sont tels que définis ci-dessus, et
   R₉ est une séquence d'ancrage, constituée par une chaîne hydrocarbonée, linéaire ou ramifiée, cycloalkyle ou aromatique, comportant des groupements azotés basiques de type : hétérocycliques, -NH₂, -NH-, -NHR, -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H),pouvant comporter des groupements -COO- et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %, et
iv) 0 à 80 % massique, de préférence 0 à 40 %, d'un ou plusieurs monomère(s) contenant au moins un groupement susceptible d'être engagé dans une réaction de couplage,
étant entendu que si l'une des teneurs massiques des composés définis en i), ii) et/ou iii) est nulle, la teneur massique des composés définis en iv) est différente de 0, et
2) greffage sur cette chaîne préformée de :
v) 0 à 90 % massique, de préférence 0 à 70 %, d'un ou plusieurs télomère(s) représenté(s) par la formule

   G-R₈

   où G représente un groupement contenant un atome d'hydrogène réactif, -OH, -COOH, -SH, -NH₂, -NHR"' (où R"' est un radical (C₁-C₃) alkyle), et R₈ est tel que défini ci-dessus,et
vi) 0 à 80 % massique , de préférence 0 à 40 %, d'un ou plusieurs télomère(s) représenté(s) par la formule

   G-R₉

   où G et R₉ sont tels que définis ci-dessus,
étant entendu que :
- les teneurs massiques des composés définis en ii) et en v) ne peuvent être simultanément égales à 0, et lorsque l'une d'entre-elles est égale à 0, alors l'autre est égale à au moins 10 % ,
- les teneurs massiques des composés définis en iii) et en vi) ne peuvent être simultanément égales à 0, et lorsque l'une d'entre-elles est égale à 0, alors l'autre est égale à au moins 1 % .

On prépare selon cette seconde variante du procédé un copolymère greffé tel que défini ci-dessus, constitué d'une chaîne principale hydrophobe et d'au moins 2 greffons, respectivement hydrophile(s) et d'ancrage.

### Préparation d'un copolymère greffé dans lequel la chaîne principale est une séquence à caractère hydrophile

Selon un aspect ultérieur, l'invention concerne une troisième variante du procédé de préparation d'un copolymère greffé comprenant au moins trois séquences de nature chimique distincte, parmi lesquelles une ou plusieurs séquence(s) d'ancrage, une ou plusieurs séquence(s) à caractère hydrophobe et une séquence à caractère hydrophile telles que définies plus haut, dans lequel la chaîne principale est une séquence à caractère hydrophile,
caractérisée en ce qu'on effectue la copolymérisation radicalaire de :
i) 10 à 90 % massique, de préférence 15 à 70 % massique, d'un ou plusieurs monomère(s) à caractère hydrophile comportant au moins un groupement choisi parmi -O-, -OH-,-COOH, -NCO-, -COO-, -SO₃H, -CONH₂, -CONHR"' (où R"' est un radical (C₁-C₃) alkyle), et constituant après polymérisation une chaîne formée d' unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000, et
ii) 0 à 90 % massique, de préférence 0 à 80% massique, d'un ou plusieurs macromonomère(s) représenté(s) par la formule : 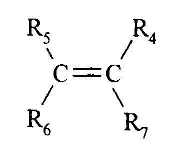 où
   R_{4,} R₅, R₆, identiques ou différents, représentent un atome d'hydrogène ou un radical (C₁-C₄) alkyle,
   R₇ est une séquence à caractère hydrophobe, constituée par une chaîne hydrocarbonée, linéaire ou ramifiée, cycloalkyle ou aromatique, pouvant comporter des groupements -COO-, -S-, -F, -Si(OR')ₙ(R")₂₋ₙ- (où R' et R" représentent des radicaux alkyles ou aryles, semblables ou différents, en C₁-C₁₀ , et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
iii) 0 à 80 % massique, de préférence 0 à 40 % massique, d'un ou plusieurs macromonomère(s) représenté(s) par la formule : 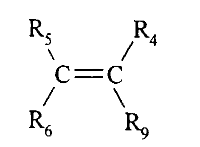 où
   R₄, R₅, R₆, sont tels que définis ci-dessus, et
   R₉ est une séquence d'ancrage, constituée par une chaîne hydrocarbonée, linéaire ou ramifiée, cycloalkyle ou aromatique, comportant des groupements azotés basiques de type : hétérocycliques, -NH₂, -NH-, -NHR, -NR₂, -CONH₂, -CONHR, -CONR₂ (où R est un radical (C₁-C₆) alkyle,
   optionnellement substitué par un ou plusieurs groupement(s) -OH, -COO-, -CO-, -O-, -SO₃H), pouvant comporter des groupements -COO- et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %, et
iv) 0 à 80 % massique, de préférence 0 à 40 %, d'un ou plusieurs monomère(s) contenant au moins un groupement susceptible d'être engagé dans une réaction de couplage,
étant entendu que si l'une des teneurs massiques des composés définis en i), ii) et/ou iii) est nulle, la teneur massique des composés définis en iv) est différente de 0, et
2) greffage sur cette chaîne préformée de :
v) 0 à 90% massique, de préférence 0 à 80% massique, d'un ou plusieurs télomère(s) représenté(s) par la formule :

   G-R₇

   où G représente un groupement contenant un atome d'hydrogène réactif, -OH, -COOH, -SH, -NH₂, -NHR"' (où R"' est un radical (C₁-C₃) alkyle), et R₇ est tel que défini ci-dessus, et
vi) 0 à 80 % massique , de préférence 0 à 40 %, d'un ou plusieurs télomère(s) représenté(s) par la formule

   G-R₉

   où G et R₉ sont tels que définis ci-dessus,
étant entendu que :
- les teneurs massiques des composés définis en ii) et en v) ne peuvent être simultanément égales à 0, et lorsque l'une d'entre-elles est égale à 0, alors l'autre est égale à au moins 10 % ,
- les teneurs massiques des composés définis en iii) et en vi) ne peuvent être simultanément égales à 0, et lorsque l'une d'entre-elles est égale à 0, alors l'autre est égale à au moins 1 % .

On prépare selon cette troisième variante du procédé un copolymère greffé tel que défini ci-dessus, constitué d'une chaîne principale hydrophile et d'au moins 2 greffons, respectivement hydrophobe(s) et d'ancrage.

Des copolymères greffés préférés selon l'invention sont ceux comprenant :
- une chaîne principale d'ancrage sur les particules solides comportant des groupements (méth)acrylate de dialkylaminoéthyle, 2-vinylpyridine, 4-vinylpyridine, N,N-diméthylacrylamide, seuls ou en mélange,
- un ou plusieurs greffons hydrophiles poly(oxyde d'éthylène), et
- un ou plusieurs greffons hydrophobes à base de (méth)acrylates d'alkyle, d'esters vinyliques seuls ou copolymérisés avec des dérivés styréniques et alkylstyrèniques, des monomères fluorés tels le méthacrylate de trifluoroéthyle, ou du méthacrylate de 3-(trimethoxysilyl)propyle.

### Utilisation des copolymères greffés selon l'invention

Les copolymères greffés selon l'invention sont avantageusement utilisables pour la préparation de concentrés pigmentaires. En effet, la présence au sein du copolymère de séquences à caractère hydrophile et hydrophobe permet la dispersion de nombre de particules solides dans un liquide et la formulation de pâtes pigmentaires d'égales performances dans un mileu aqueux et/ou organique.

Lesdits copolymères permettent également de manière avantageuse la préparation de concentrés pigmentaires sans résine ajoutée, ce qui améliore la compatibilité de ces pâtes avec une large gamme de liants.

A titre d'exemple, on peut préparer des concentrés pigmentaires contenant les copolymères selon l'invention en utilisant les pigments, charges et solides fibreux suivants :
- des pigments minéraux tels que les dioxydes de titane, les oxydes de zinc, les sulfates de zinc, les phosphates de zinc, les lithopones, les noirs de carbone, les oxydes de fer, les phosphates de manganèse, les aluminates de cobalt, les sulfates d'antimoine ou les chromates de zinc,
- des pigments métalliques,
- des pigments organiques tels que les oxazines, les dioxazines, les thiazines, les phtalocyanines, les xanthènes, les acrydines, les quinacridones ou les pérylènes.

On utilisera avantageusement les copolymères greffés selon l'invention pour l'incorporation de charges ou de solides fibreux dans les peintures, notamment pour la dispersion d'oxydes et d'hydroxydes d'aluminium, de silices de quartz, de talcs, de kaolins, de micas, de sulfates de calcium, de sulfates de barium ou de carbonates de calcium. Les films de peinture réalisés en utilisant lesdits copolymères présentent avantageusement une sensibilité réduite à l'eau, tout en conservant à l'application un brillant élevé.

Afin de préparer des concentrés pigmentaires, on utilisera de préférence les copolymères greffés selon l'invention, à raison d'un rapport massique particules solides/dispersant compris entre 1/50 et 100/1, en particulier 1/10 et 20/1.

Le mélange réactionnel obtenu à l'issue de la synthèse du copolymère greffé peut être utilisé soit directement, soit après concentration par distillation sous pression réduite ou distillation azéotropique en ajoutant éventuellement un cosolvant.

On peut également remplacer le milieu de réaction par addition d'un solvant ayant une température d'ébullition supérieure ou formant un azéotrope avec celui-ci, puis élimination du solvant réactionnel par distillation sous pression réduite ou azéotropique. On peut ainsi avantageusement remplacer le solvant réactionnel par de l'eau ou un liquide miscible à l'eau pour formuler des pâtes aqueuses.

Alternativement, il est possible d'isoler le copolymère greffé selon l'invention dans un solvant sélectif ou par élimination complète du solvant de réaction. Ledit copolymère sera ensuite re-dissous dans un liquide adéquat ou utilisé tel quel si sa viscosité le permet.

Les pigments, charges et solides fibreux peuvent encore être traités par une solution de copolymère greffé selon l'invention, par exemple en lit fluidisé ou dans un cyclone, les particules enrobées ainsi obtenues étant ensuite redispersées dans un liquide ou un mélange de liquides approprié(s).

Les dispersions de particules solides, pigments, charges ou solides fibreux dans un liquide sont réalisées selon des procédés de broyage et d'empâtage usuels dans le domaine des peintures et encres.

### EXEMPLES

Sauf indications contraires, les parties citées dans les exemples font référence à des grandeurs massiques.

### 1. Télomères et macromonomères utilisés au cours des synthèses

Les télomères (homopolymères ou copolymères portant à l'une de leurs extrémités une fonction chimique réactive susceptible d'être engagée dans une réaction de couplage) ainsi que les macromonomères (homopolymères ou copolymères portant à l'une de leurs extrémités une double liaison susceptible d'être engagée dans une réaction de polymérisation par voie radicalaire), utilisés lors de la préparation des copolymères greffés ont été synthétisés à partir de techniques bien connues de l'homme de l'art et décrites dans les publications C. BONARDI et coll., Makromolekulare Chemie, 186, 261 (1985), ou K. ITO et coll., Macromolecules, 13, 216 (1980), ou plus généralement dans 2 ouvrages de référence : A. AKELAH et al., "Functionalized polymers and their applications, Chapman & Hall , New-York (1990), et Y. YAMASHITA, "Chemistry and Industry of Macromonomers", Hüthig & Wepf, New-York (1993).

Les caractéristiques des télomères utilisés au cours des synthèses sont regroupés dans le Tableau 1 ci-après.

Les caractéristiques des macromonomères obtenus par modification chimique des précédents télomères sont présentés dans le Tableau 2 ci-après.

### 2. Exemples de copolymères greffés synthétisés par voie radicalaire :

### Exemple 1 :

Dans un réacteur surmonté d'un réfrigérant, de 2 ampoules d'addition, d'une arrivée d'azote, d'un agitateur et d'un thermomètre, on introduit 100 parties de la solution de macromonomère A, 10,9 parties de méthacrylate de poly(éthylèneglycol) de masse moléculaire moyenne 500 (HEMA-10), et 170 parties de tétrahydrofuranne (THF). La température de la solution est fixée à 65 °C sous atmosphère inerte d'azote. L'ampoule d'addition 1 est chargée avec 1,2 parties de méthacrylate de 2-diméthylaminoéthyle (MADAME) et 40 parties de THF, alors que l'ampoule 2 contient 0.1 partie d'azobisisobutyronitrile (AIBN) et 40 parties de THF. Le contenu des 2 ampoules est introduit au goutte à goutte dans le réacteur en 2 heures. La réaction est poursuivie durant 6 heures à la température de polymérisation, Tp, de 65 °C.

On obtient alors une solution jaune de copolymère greffé, de masse moléculaire moyenne en nombre (Mn) 6 400 et d'indice de polydispersité (Ip) 1,94, dans le THF, mesurés par chromatographie de perméation de gel (GPC) à l'aide d'un appareil de type WATERS 150 ALC/GPC à partir d'étalons PS. Les masses moléculaires ont été déterminées à ± 100 unités près.

### Exemples 2 à 14 :

Des exemples de copolymères greffés, synthétisés, par voie radicalaire selon le mode opératoire décrit dans l'exemple 1 sont répertoriés dans le tableau 3. Seules les parties relatives au macromonomère siliconé commercial AK-5 (Sté TOAGOSEI Chemicals Ltd) concernent le macromonomère sec, le toluène et la méthyléthylcétone (MEK) ayant été préalablement éliminés par distillation.

### Exemple comparatif 15 :

Dans un réacteur semblable à celui décrit dans l'exemple 1, on introduit 80 parties de méthacrylate de poly(éthylèneglycol) de masse moléculaire moyenne 300 (HEMA-5), et 1 330 parties de THF. Après avoir amené la température de la solution à Tp = 65 °C, on ajoute simultanément et en 2 heures, le contenu des ampoules 1 et 2, chargées respectivement avec 20 parties de MADAME, 100 parties de méthacrylate de lauryle (LMA), 225 parties de THF et 1,7 parties d'AIBN, 225 parties de THF. On laisse le mélange évoluer durant 6 heures à 65 °C.

On obtient alors une solution jaune de copolymère monogreffé, ne contenant qu'un seul macromonomère hydrophile (le monomère hydrophobe, LMA, étant présent sous forme d'unités monomère, statistiquement réparties le long de la chaîne principale d'ancrage), de Mn = 16 400 et de Ip = 2,28, dans le THF.

### 3. Exemples de copolymères greffés synthétisés par voie radicalaire puis greffage

### Exemple 16 :

Dans un réacteur semblable à celui décrit dans l'exemple 1, on introduit 11,5 parties de méthacrylate de poly(éthylèneglycol) de masse moléculaire moyenne 500 (HEMA-10) et 170 parties de tétrahydrofuranne (THF). La solution est amenée à Tp = 65 °C. On introduit alors dans le réacteur par l'intermédiaire de l'ampoule 1, 11,5 parties de N,N-diméthylacrylamide (DMAm), 5,8 parties de méthacrylate de glycidyle (GLMA) et 40 parties de THF, en 2 heures. Simultanément et durant la même période, on ajoute via l'ampoule 2, 1 partie d'azobisisobutyronitrile (AIBN) et 40 parties de THF.

Après 5 heures de réaction on récupère une solution jaune pâle de copolymère, de Mn = 21 300 et de Ip = 1,74.

Dans un deuxième temps 100 parties de solution de télomère E, 4,8 parties de triéthylamine (Et₃N) et 210 parties de toluène sont introduites dans le réacteur. La température de la solution est alors fixée à 90 °C, après élimination du THF résiduel par distillation. Cette température de greffage, Tgr, sera maintenue durant 6 heures.

On obtient finalement une solution jaune de copolymère greffé, de Mn = 4 500 et de Ip = 2,37, dans le tolulène.

### Exemple 17 :

Dans un réacteur, semblable à celui décrit dans l'exemple 1, on introduit 39.5 parties de méthacrylate de poly(éthylèneglycol) de masse moléculaire moyenne 300 (HEMA-5) et 780 parties de THF, puis on amène la température de la solution à 65 °C. Sous flux d'azote les 2 ampoules d'addition permettent l'ajoût, d'une part de 13,2 parties de méthacrylate de 2-hydroxyéthyle 78,9 parties de méthacrylate de 2-diméthylaminoéthyle (MADAME), 195 parties de THF et d'autre part d'1,4 parties d'AIBN, 195 parties de THF, de manière simultanée et continue en 2 heures. La polymérisation sera poursuivie encore pendant 5 heures à Tp = 65 °C.

On récupère une solution de copolymère monogreffé intermédiaire, de Mn = 4 300 et de Ip = 2,03.

L'étape de greffage débute alors par le refroidissement du mélange réactionnel à température ambiante. On ajoute alors 100 parties de la solution de télomère D, 18,0 parties de dicyclohexylcarbodiimide (DCCI) et 3,9 parties de 4-diméthylaminopyridine (DMAP) dans le réacteur. La température de greffage Tgr est maintenue à 25 °C durant 6 heures.

Après filtration de l'acylurée formée au cours de la condensation, on obtient une solution jaune de copolymère greffé, de Mn = 2 300 et de Ip = 1,99.

### Exemples 18 à 21 :

Des exemples complémentaires, réalisés suivant les modes opératoires décrits dans les exemples 16 et 17, sont décrits dans le tableau 4. Les parties mentionnées dans ce tableau et relatives aux télomères font référence à des solutions de télomères.

### 4. Exemples de concentrés pigmentaires préparés à partir des copolymères greffés de l'invention

### Exemple 22 :

On concentre à 50 % la solution de copolymère obtenue dans l'exemple 6. On ajoute alors au résidu 250 parties d'eau, puis l'on élimine le solvant résiduel par distillation pour récupérer le copolymère greffé en solution dans l'eau à 22,2 % massique.

Cette solution aqueuse de copolymère est utilisée lors de la préparation de deux pâtes pigmentaires, contenant respectivement un pigment minéral oxyde jaune (pigment jaune C.I. 42) et un pigment organique bleu de phtalocyanine (pigment bleu C.I. 15), et dont les compositions sont données dans le tableau 5.

Ces concentrés pigmentaires, préparés selon les techniques d'empâtage classiques, connues de l'homme de l'art, sont ensuite soumis durant 1 heure à un broyage par billes de zirconium.

Les caractéristiques de ces concentrés pigmentaires, évaluées après broyage, sont présentées dans le tableau 6.

### Exemple 23 :

De la même manière que dans l'exemple 22 on concentre 500 parties de la solution de copolymère décrite dans l'exemple 7, que l'on transfère ensuite en milieu aqueux par addition de 280 parties d'eau et distillation, pour obtenir finalement une solution de dispersant à 16,1 % massique.

La composition ainsi que les propriétés des concentrés pigmentaires formulés à partir de ce dispersant sont données respectivement dans les tableaux 5 et 6.

### Exemples 24 et 25 :

500 parties des solutions de copolymère décrites respectivement dans l'exemple 10 (exemple 24) et dans l'exemple 11 (exemple 25) sont traitées selon le mode opératoire décrit dans l'exemple 22, en utilisant dans les deux cas 250 parties d'eau.

On obtient ainsi deux solutions aqueuses de dispersant d'extrait sec 18,8 % massique, qui sont utilisées pour formuler des concentrés pigmentaires dont les compositions et les propriétés sont répertoriées respectivement dans les tableaux 5 et 6.

### Exemple comparatif 26 :

500 parties de la solution de copolymère décrite dans l'exemple comparatif 15 sont traitées selon le mode opératoire décrit dans l'exemple 22, en utilisant 150 parties d'eau.

Après évaporation du solvant résiduel, on obtient une solution aqueuse de dispersant d'extrait sec 35,5 % massique, qui sera utilisée lors de la formulation de concentrés pigmentaires, dont les compositions et propriétés sont données dans les tableaux 5 et 6.

### 5. Exemples de peintures préparées à partir de copolymères greffés :

Afin de tester la compatibilité des concentrés pigmentaires, formulés à partir des copolymères greffés, avec certains liants, lesdits concentrés ont été utilisés seuls ou en mélange pour teinter 3 types de peintures dont les formules sont données ci-dessous :

| Peinture I : (résine terpolymère acétate de vinyle-éthylène-chlorure de vinyle) | |
|---|---|
| eau | 178 |
| liant | 178 |
| matière de charge | 460 |
| pigment dioxyde de titane | 160 |
| dispersant charges | 9 |
| solution de soude | 8 |
| agent rhéologique | 4 |
| agent anti-mousse | 2 |
| biocide | 1 |

| Peinture II : (résine styrène-acrylique en émulsion) | |
|---|---|
| eau | 200 |
| glycol | 44 |
| liant | 402 |
| matière de charge | 141 |
| pigment dioxyde de titane | 191 |
| dispersant charges | 14 |
| solution d'ammoniaque | 2 |
| agent rhéologique | 2 |
| agent anti-mousse | 3 |
| biocide | 1 |

| Peinture III : (résine alkyde longue en huile) | |
|---|---|
| white-spirit | 137 |
| liant | 507 |
| pigment dioxyde de titane | 330 |
| dispersant | 5 |
| siccatif | 13 |
| agent de conservation | 8 |

Les concentrés pigmentaires sont mélangés à ces peintures en respectant les proportions citées dans le tableau 7 ci-après.

### Exemple 27 :

Les peintures I, II et III sont teintées par les deux concentrés pigmentaires à base d'oxyde jaune (pigment jaune C.I. 42) et de bleu de phtalocyanine (pigment bleu C.I. 15) décrits dans l'exemple 22, afin de tester la comptabilité du copolymère greffé de l'exemple 6 , utilisé comme dispersant, avec différents liants.

Les tests utilisés sont les suivants :
- Test de compatibilité : on applique côte à côte sur une carte de contraste , deux échantillons de la même peinture, prélevés respectivement après 3 et 10 minutes d'agitation au moyen d'un appareil de type Red-Devil.
- Test du "touché ou doigt" (ou "Rub-test") : Sur le film de peinture humide, 3 minutes après application, on applique une légère pression de l'index, de façon à écraser localement le film. Afin d'exprimer les résultats de ces tests, on adopte une échelle de cotation graduée de 0 à 10, telle que :
   0 = aucune floculation, bonne compatibilité, aucune différence entre le prélèvement à 3 min et à 10 min, et le rub-test ne fait apparaître aucune différence entre la zone écrasée et le reste du film ;
   10 = système floculé, problème de compatibilité, les prélèvements à 3 et 10 min, ainsi que la zone écrasée dans le rub-test et le reste du film présentent un écart de teinte important.

Les résultats des tests de compatibilité avec chacune des peintures I, II, III sont présentés dans le tableau 8.

### Exemples 28-30 :

Trois séries de 9 échantillons, exemples 28, 29, 30, sont préparées à partir des peintures I, II, et III ainsi que des deux concentrés pigmentaires formulés respectivement dans les exemples 23, 24, et 25 contenant respectivement les copolymères greffés des exemples 7, 10 et 11 en tant que dispersant, en suivant la méthode décrite dans l'exemple 27.

Les résultats des tests effectués sur ces peintures sont rapportés dans le tableau 8.

### Exemple comparatif 31 :

Trois séries d'échantillons ont été préparés à partir des peintures I et III et des deux concentrés pigmentaires élaborés dans l'exemple comparatif 26 contenant le copolymère greffé de l'exemple comparatif 15 en tant que dispersant, selon le mode opératoire présenté dans l'exemple 27.

Les résultats des tests effectués sur ces peintures sont rapportés dans le tableau 8.

Les résultats du tableau 8 montrent qu'avec les peintures des exemples 27, 28, 29 et 30 contenant les concentrés pigmentaires des exemples 22, 23, 24 et 25 comprenant respectivement les copolymères greffés selon l'invention des exemples 6, 7, 10 et 11, la compatibilité du dispersant évaluée par les tests mentionnés à l'exemple 27 est très bonne dans tous les cas. En revanche, les peintures de l'exemple comparatif 31 contenant les concentrés pigmentaires élaborés dans l'exemple comparatif 26 comprenant le copolymère de l'exemple 15, on obtient une mauvaise compatibilité du dispersant.

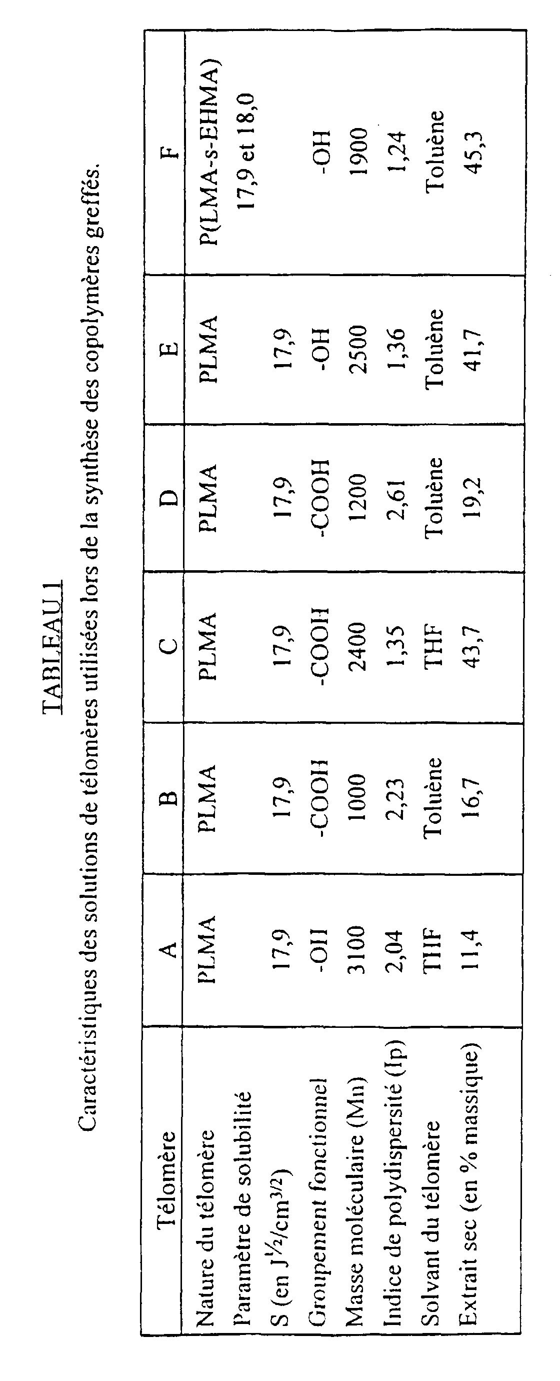

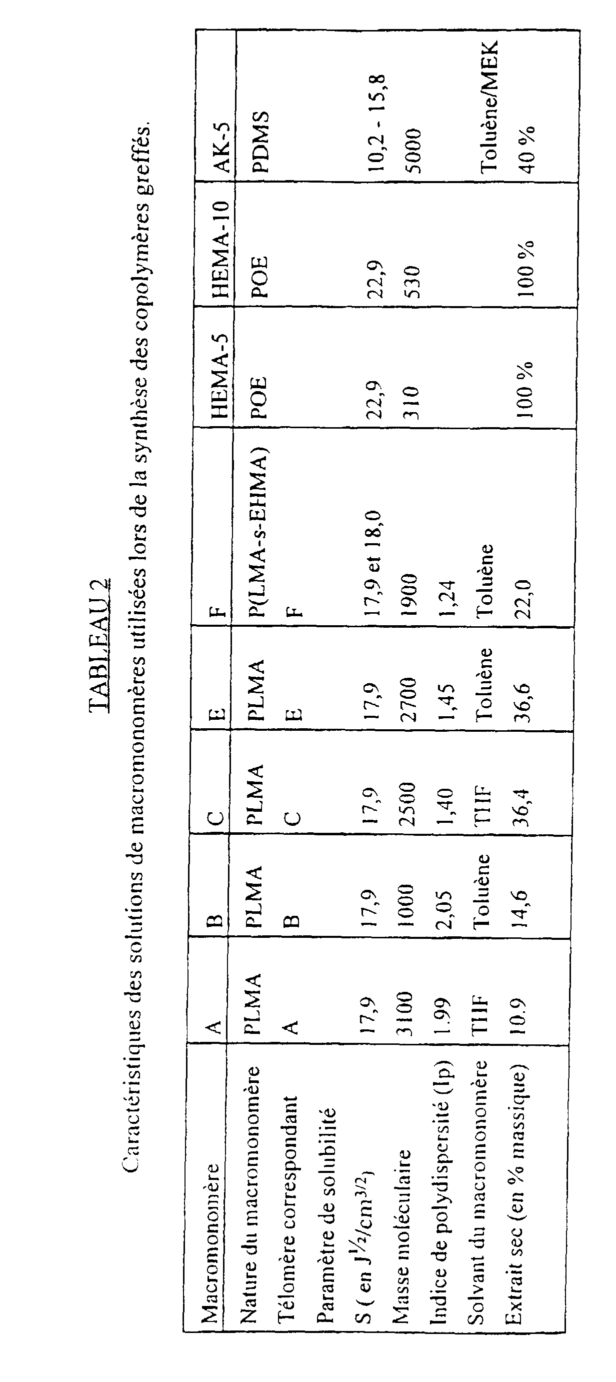

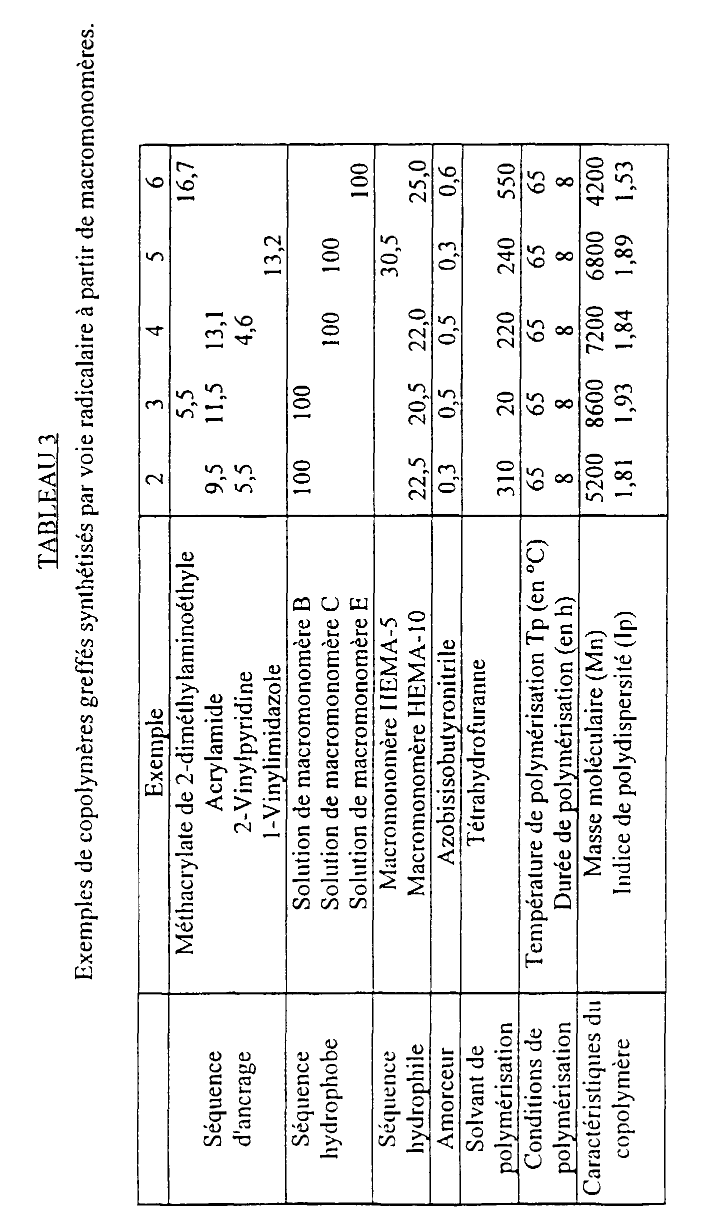

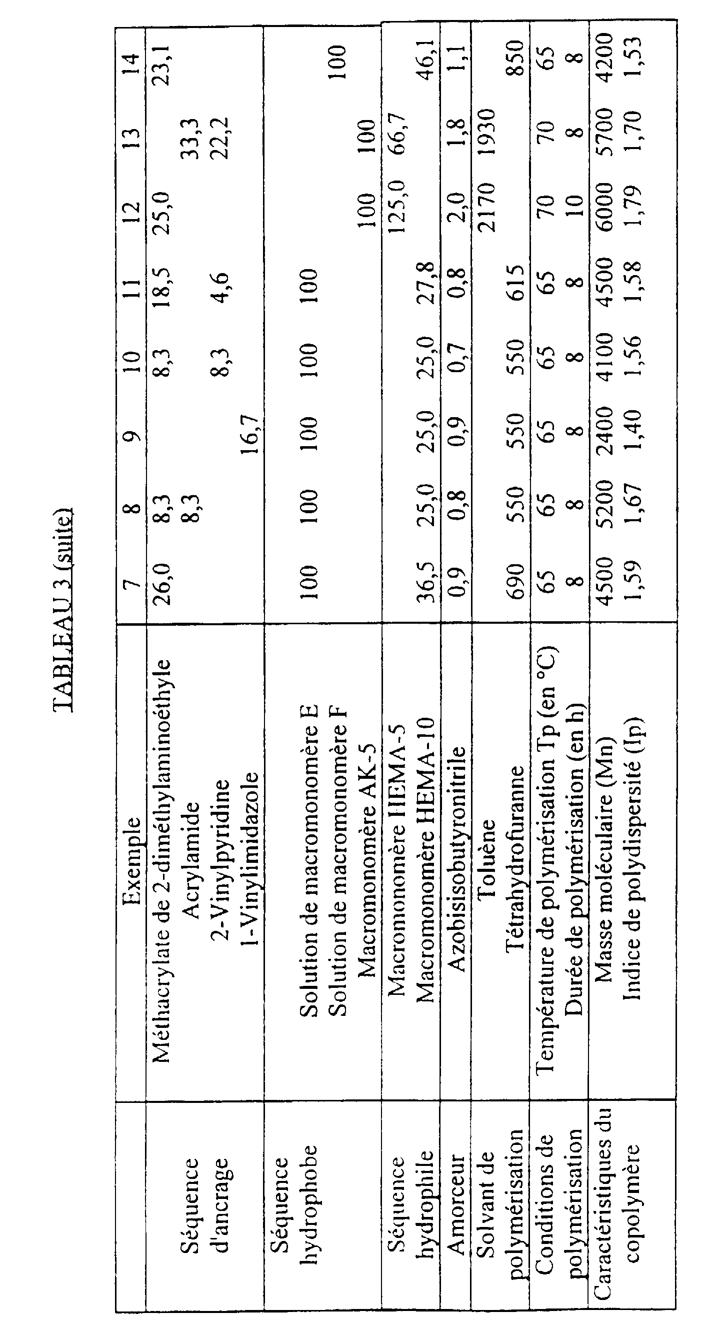

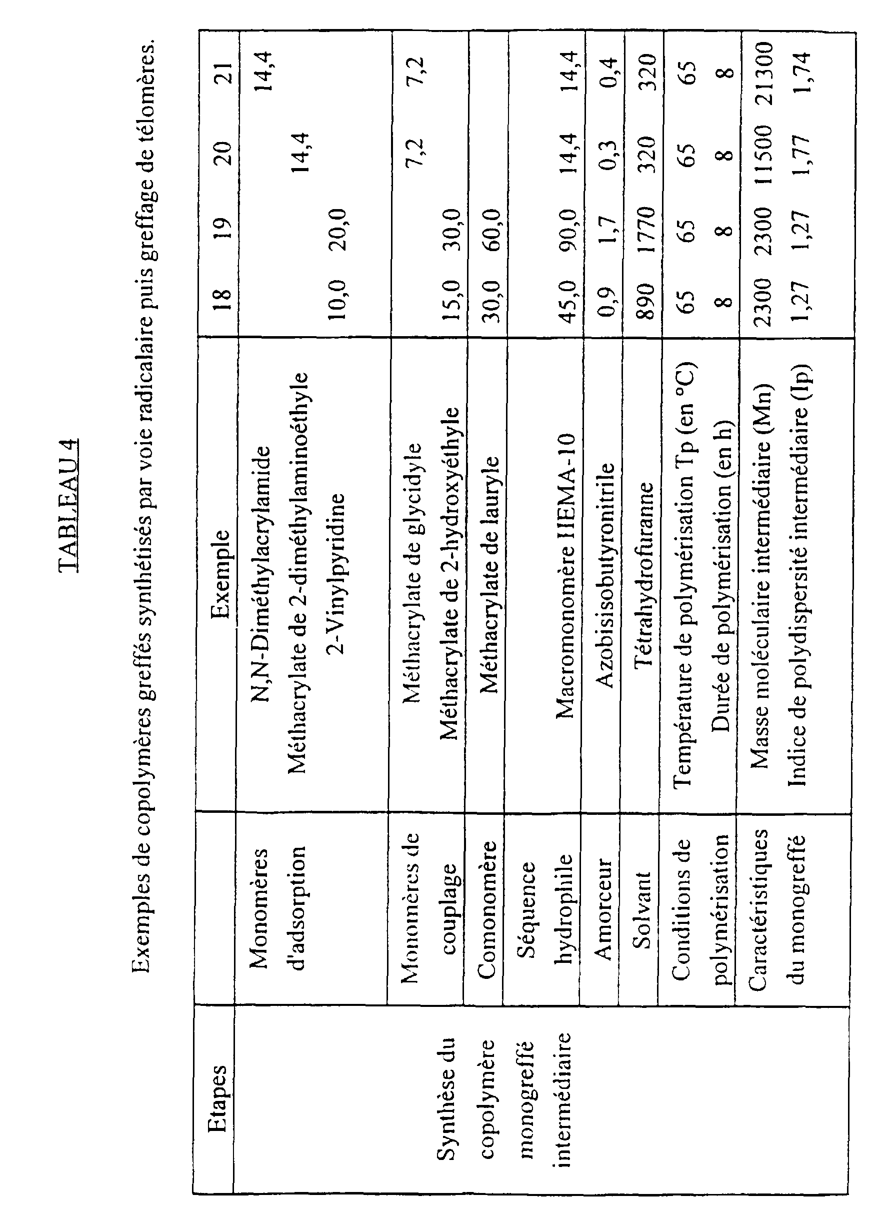

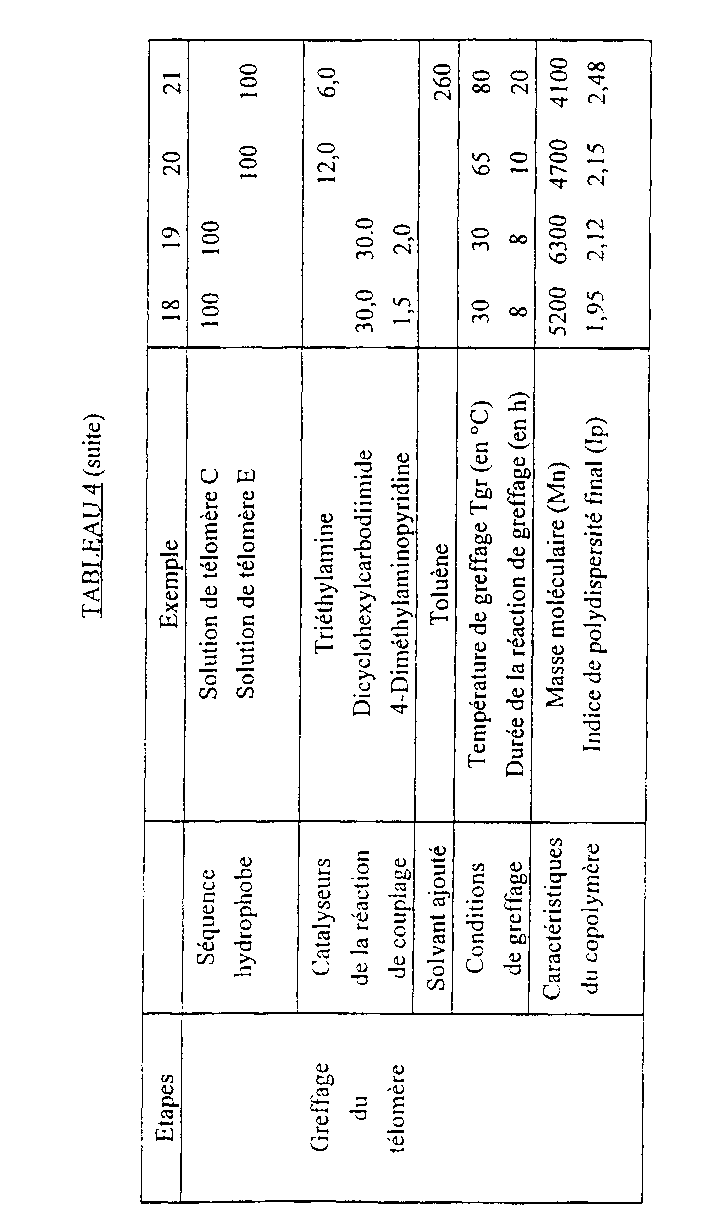

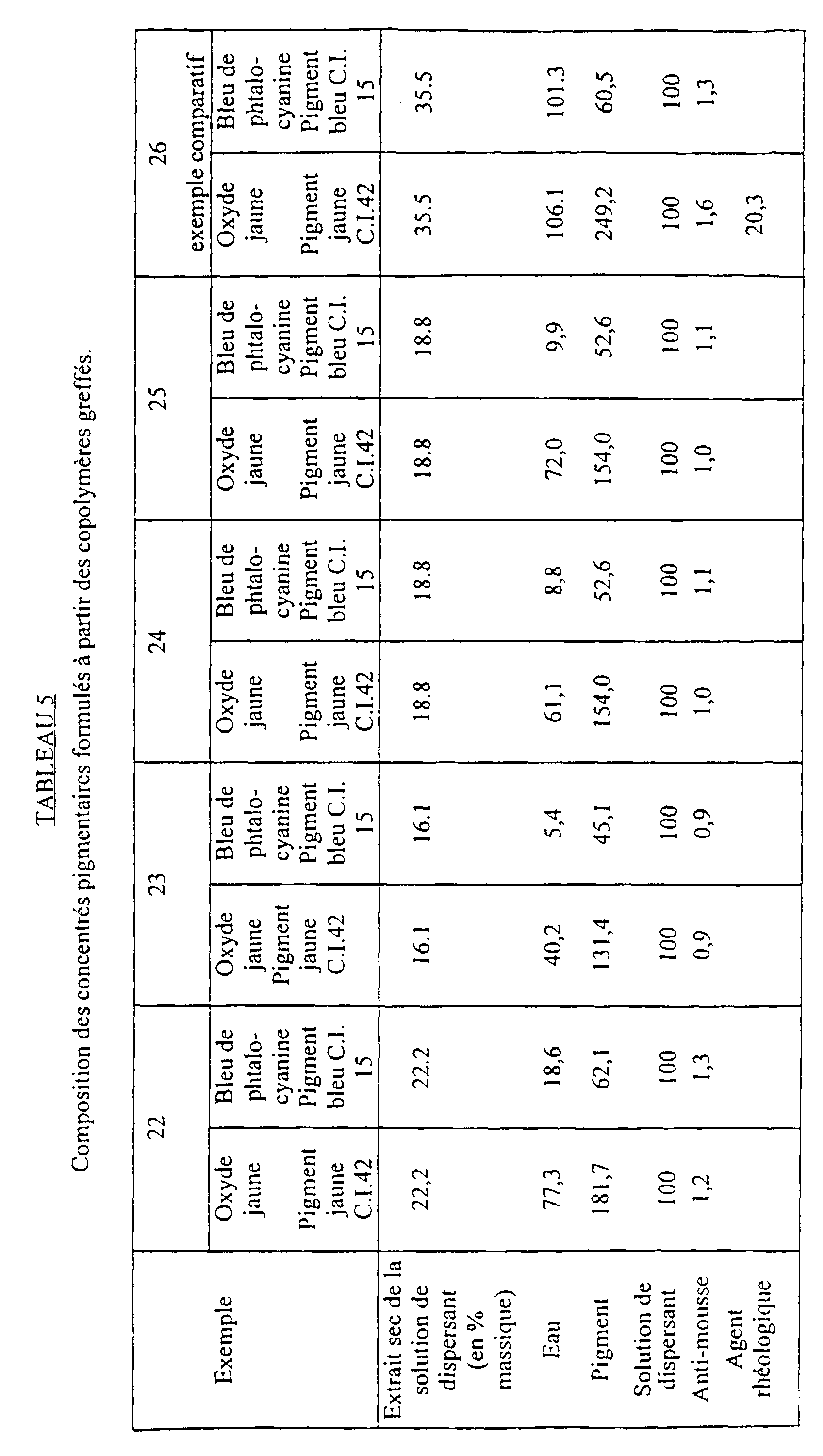

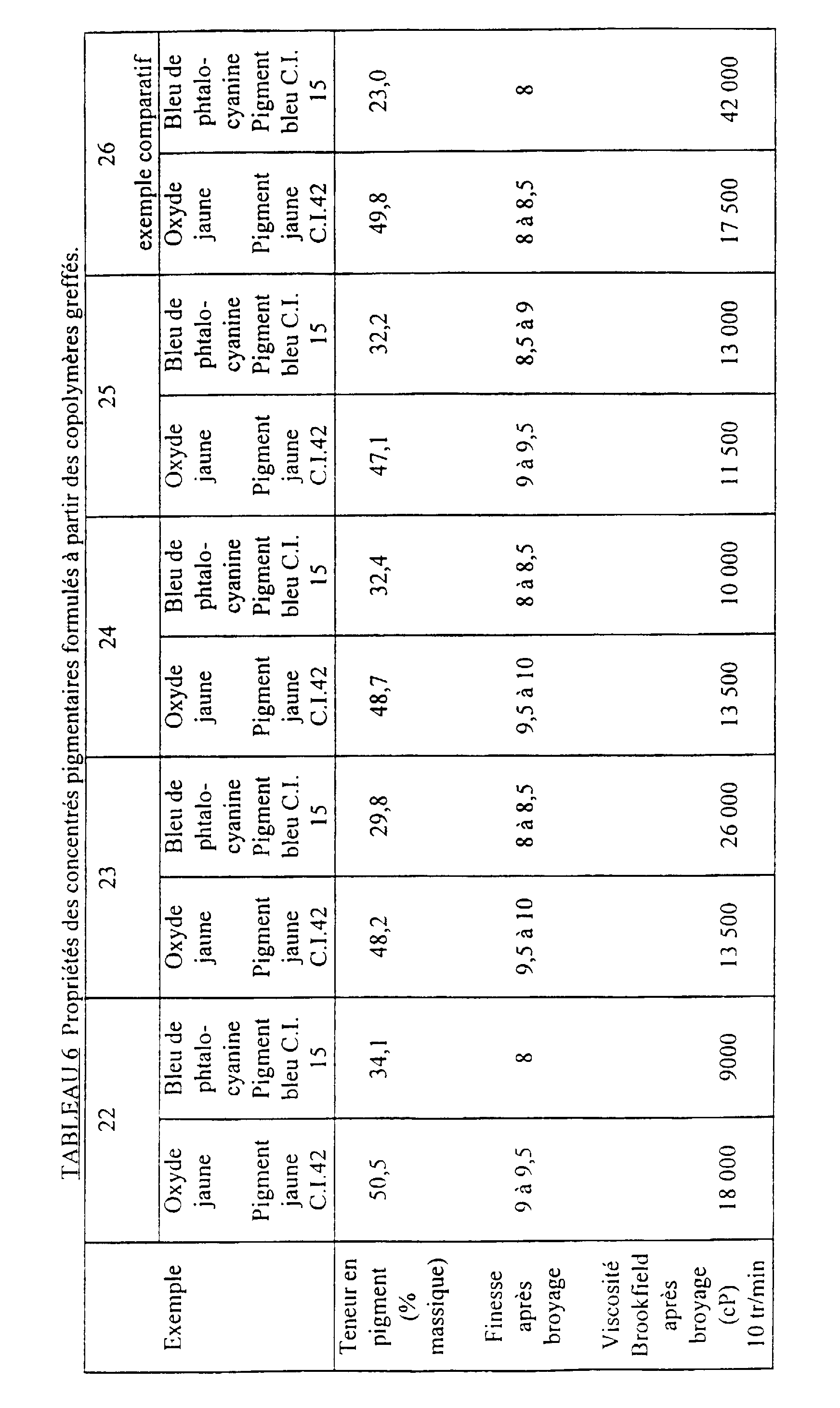

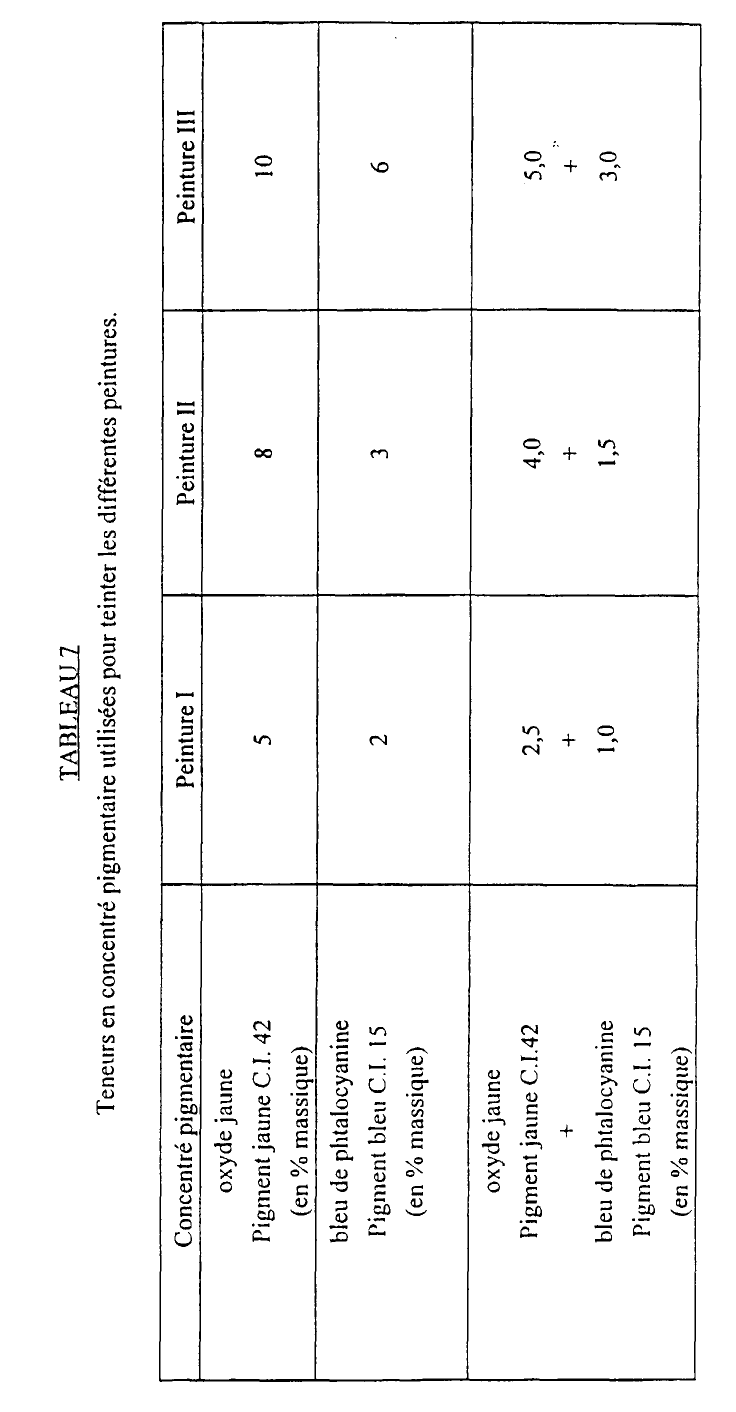

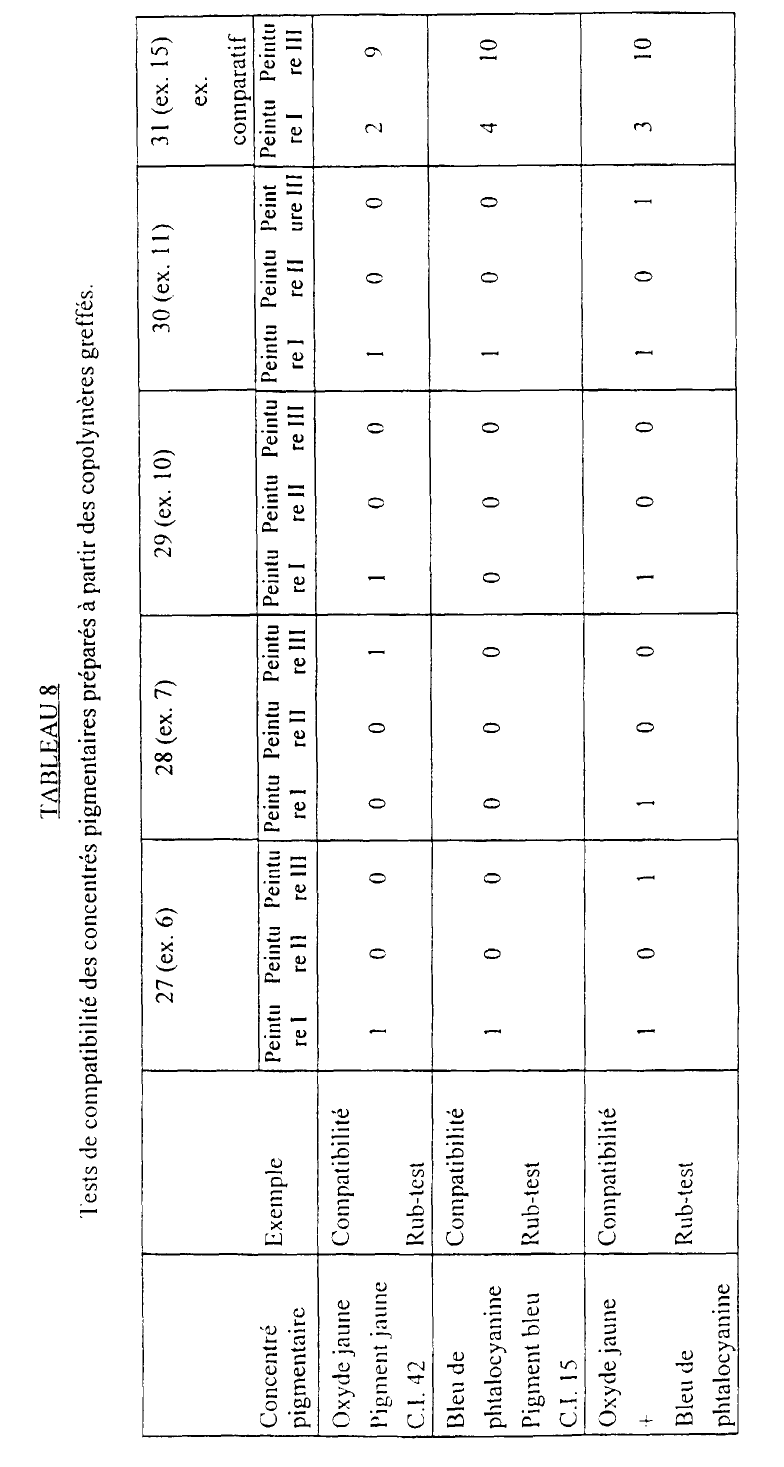

## Revendications

1. Copolymère greffé comprenant au moins trois séquences de nature chimique distincte, parmi lesquelles une ou plusieurs séquence(s) d'ancrage sur les particules solides, une ou plusieurs séquence(s) à caractère hydrophobe et une ou plusieurs séquence(s) à caractère hydrophile, constitué de :
1/ 1 à 80 % massique, de préférence 5 à 40 % massique, d'une ou plusieurs séquence(s) d'ancrage sur les particules solides, constituée(s) par une chaîne hydrocarbonée, linéaire ou ramifiée, cycloalkyle ou aromatique, comportant des groupements azotés basiques de type : hétérocycliques, -NH₂, -NH-, -NHR, ou -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H), pouvant comporter des groupements -COO-, et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %, et
2/ au moins 10 % massique, de préférence 25 à 80 % massique, d'une ou plusieurs séquence(s) à caractère hydrophobe, constituée(s) par une chaîne hydrocarbonée, linéaire ou ramifiée, cycloalkyle ou aromatique, pouvant comporter des groupements -COO-, -S-, -F, -Si(OR')ₙ(R")₂₋ₙ- (où R' et R" représentent des radicaux alkyles ou aryles, semblables ou différents, en C₁-C₁₀ , et n = 0 à 2), formée(s) d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
3/ au moins 10 % massique, de préférence 15 à 70 % massique, d'une ou plusieurs séquence(s) à caractère hydrophile, constituée(s) par une chaîne hydrocarbonée, linéaire ou ramifiée comportant des groupements -O-, -OH, -NCO-, -COO-, -COOH, -CONH₂, -CONHR"' (où R"' est un radical (C₁-C₃) alkyle), -NH-, -S-, -SO₃H, formée(s) d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000.

2. Copolymère selon la revendication 1, dans lequel la chaîne principale est une séquence d'ancrage sur les particules solides constituée par une chaîne hydrocarbonée, linéaire ou ramifiée, cycloalkyle ou aromatique, comportant des groupements azotés basiques de type : hétérocycliques, -NH₂, -NH-, -NHR, -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H), pouvant comporter des groupements -COO-, et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %.

3. Copolymère selon la revendication 1, dans lequel la chaîne principale est une séquence à caractère hydrophobe constituée par une chaîne hydrocarbonée, linéaire ou ramifiée, cycloalkyle ou aromatique, pouvant comporter des groupements -COO-, -S-, -F,-Si(OR')ₙ(R")₂₋ₙ- (où R' et R" représentent des radicaux alkyles ou aryles, semblables ou différents, en C₁-C₁₀, et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500.

4. Copolymère selon la revendication 1, dans lequel la chaîne principale est une séquence à caractère hydrophile, constituée par une chaîne hydrocarbonée linéaire ou ramifiée, comportant des groupements -O-, -OH, -NCO-, -COO-, -COOH, -CONH₂, -CONHR"' (où R"' est un radical (C₁-C₃) alkyle), -SO₃H, formée d'unités monomère dont le paramètre de solubilité est supérieur à 22 J^{1/2}/cm^{3/2}, de préférence supérieur à 22,5 J^{1/2}/cm^{3/2}), et dont la masse moléculaire est comprise entre 250 et 10 000, de préférence entre 300 et 3 000.

5. Copolymère selon l'une quelconque des revendications 1 à 4, sous forme d'un de ses sels , obtenu par quaternisation ou neutralisation des fonctions basiques.

6. Copolymère selon l'une quelconque des revendications 1 à 5, caractérisé en ce que la séquence d'ancrage comprend des groupements azotés basiques introduits à partir d'un ou plusieurs composé(s) choisis parmi :
a) - les vinylpyridines, telles que 2-vinylpyridine, 3-vinylpyridine, 4-vinylpyridine ou 2-méthyl-5-vinylpyridine,
- la vinylimidazole, la 2-méthyl-N-vinylimidazole, la vinylcarbazole, la N-vinylpyrrolidone, la 3-méthyl-N-vinylpyrazole, la 4-méthyl-5-vinylthiazole, la N-vinylcaprolactame, le méthacrylate d'éthylimidazolidone,
- les (méth)acrylamides telles que (méth)acrylamide, N-méthylacrylamide, N-isopropylacrylamide et N,N-diméthylacrylamide,
- la N-méthylol(méth)acrylamide, la N,N-diméthylol(méth)acrylamide, l'acide 2-acrylamido-2-méthyl-1-propanesulfonique, la diacétone acrylamide, la méthyl-2-acrylamido-2-méthoxyacétate, la N-tris(hydroxyméthyl) méthylacrylamide,
- les aminoalkyl(méth)acrylates de formule suivante : 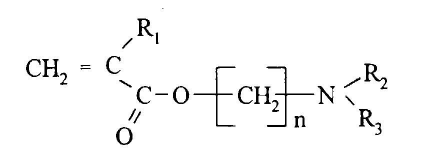 où R₁ est un atome d'hydrogène ou un radical (C₁-C₄) alkyle ; R₂ et R₃ identiques ou différents représentent chacun un radical (C₁-C₆) alkyle, n = 0 à 6,
lesdits groupements azotés étant dans ce premier cas introduits par copolymérisation radicalaire d'un ou plusieurs monomère(s) éthylénique(s) insaturés cités ci-dessus, et
b) - la N-N-diéthyl-1,4-butanediamine, la 1-(2-aminoéthyl)-pipérazine, la 2-(1-pyrrolidyl)-éthylamine, la 4-amino-2-méthoxy-pyrimidine, le 2-diméthylamino-éthanol, la 1-(2-hydroxyéthyl)-pipérazine, la 4-(2-hydroxyéthyl)-morpholine, la 2-mercaptopyrimidine, la 2-mercaptobenzimidazole, la N,N-diméthyl-1,3-propanediamine, la 4-(2-aminoéthyl)-pyridine, la N-N-diallyl-mélamine, le 3-amino-1,2,4-triazole, le 1-(3-aminopropyl)-imidazole, la 4-(2-hydroxyéthyl)-pyridine, le 1-(2-hydroxyéthyl)-imidazole, le 3-mercapto-1,2,4-triazole,
lesdits groupements azotés étant dans ce second cas fixés sur un copolymère, linéaire ou greffé, en mettant à profit des fonctions réactives introduites le long de la chaîne préformée.

7. Copolymère selon l'une quelconque des revendications 1 à 6, caractérisé en ce que la ou les séquence(s) à caractère hydrophobe sont constituée(s) à partir d'unités monomère choisies parmi :
- les esters d'acide (méth)acrylique tels que (méth)acrylate de méthyle, (méth)acrylate d'éthyle, (méth)acrylate de propyle, (méth)acrylate de butyle, (méth)acrylate d'hexyle, (méth)acrylate de cyclohexyle, (méth)acrylate d'éthylhexyle, (méth)acrylate d'octyle, (méth)acrylate de nonyle, (méth)acrylate d'isodécyle, (méth)acrylate de lauryle, (méth)acrylate de stéaryle, (méth)acrylate de pentadécyle, (méth)acrylate de cétyle, (méth)acrylate de béhényle, (méth)acrylate de 3-(triméthoxysilyl)propyle,
- les esters vinyliques tels que acétate de vinyle, propionate de vinyle, butyrate de vinyle, sorbate de vinyle, hexanoate de vinyle, éthylhexanoate de vinyle, laurate de vinyle, stéarate de vinyle,
- le styrène et les alkylstyrènes tels que α-méthylstyrène, vinyltoluène, tertiobutylstyrène,
- les diènes tels que butadiène, isoprène, pouvant être hydrogénés après polymérisation,
- les alkylènes tels que éthylène, propylène,
- les siloxanes tels que diméthylsiloxane, diphénylsiloxane, méthylphénylsiloxane,
- les composés fluorés tels que (méth)acrylate de trifluoroéthyle, (méth)acrylate de pentafluoropropyle, (méth)acrylate d'heptafluorobutyle, (méth)acrylate d'octafluoropentyle, (méth)acrylate de pentadécafluorooctyle, (méth)acrylate d'eicosafluoroundécyle, fluorure de vinyle, tétrafluoroéthylène,
ou de produits de polycondensation, polyesters ou polyamides.

8. Copolymère selon l'une quelconque des revendications 1 à 7, caractérisé en ce que la ou les séquence(s) à caractère hydrophile sont constituée(s) à partir d'unités monomère choisies parmi :
- l'oxyde d'éthylène,
- les acides (méth)acryliques, l'acide maléique, l'acide fumarique, l'acide itaconique,
- les dérivés d'acrylamide tels que la (méth)acrylamide, la N-méthylacrylamide, la N-isopropylacrylamide,
- l'éthylèneimine,
- l'alcool vinylique,
- la vinylpyrrolidone, la vinylméthyloxazolidone,
- le vinylsulfonate,
- le méthallylsulfonate de sodium,
- le méthacrylate de glycérol.

9. Copolymère selon la revendication 1, comprenant :
- une chaîne principale d'ancrage sur les particules solides comportant des groupements (méth)acrylate de dialkylaminoéthyle, N,N-diméthylacrylamide, 2-vinylpyridine, 4-vinylpyridine, seuls ou en mélange,
- un ou plusieurs greffons hydrophiles poly(oxyde d'éthylène), et
- un ou plusieurs greffons hydrophobes à base de (méth)acrylates d'alkyle, d'esters vinyliques seuls ou copolymérisés avec des dérivés styréniques ou alkylstyrèniques, des monomères fluorés tels le méthacrylate de trifluoroéthyle, ou du méthacrylate de 3-(trimethoxysilyl)propyl.

10. Procédé de préparation d'un copolymère greffé selon la revendication 2, dans lequel la chaîne principale est une séquence d'ancrage, caractérisé en ce que l'on effectue ;
1) la copolymérisation radicalaire de :
i) 0 à 80 % massique, de préférence 0 à 40 % massique, d'un ou plusieurs monomère(s) comportant au moins un groupement azoté basique de type hétérocyclique, -NH₂, -NHR, -NR₂, -CONH₂, -CONHR, -CONR₂ (où R est un radical (C₁-C₆) alkyle, optionnellement substitué par un ou plusieurs groupement(s) -COO-, -CO-, -O-, -OH, -SO₃H), et
ii) 0 à 90 % massique, de préférence 0 à 80 % massique, d'un ou plusieurs macromonomère(s) représenté(s) par la formule : 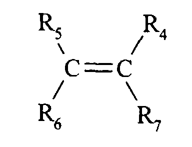 où
R₄, R₅, R₆, identiques ou différents, représentent un atome d'hydrogène ou un radical (C₁-C₄) alkyle,
R₇ est une séquence à caractère hydrophobe, constituée par une chaîne hydrocarbonée, linéaire ou ramifiée, cycloalkyle ou aromatique, pouvant comporter des groupements -COO-, -S-, -F, -Si(OR')ₙ(R")₂₋ₙ- (où R' et R" représentent des radicaux alkyles ou aryles, semblables ou différents, en C₁-C₁₀ , et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10.000, de préférence entre 500 et 3500, et
iii) 0 à 90 % massique, de préférence 0 à 70 % massique, d'un ou plusieurs macromonomère(s) représenté(s) par la formule : 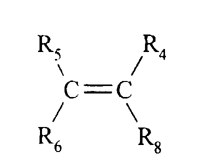 où
R₄, R₅, R₆ sont tels que définis ci-dessus, et
R₈ est une séquence à caractère hydrophile, constituée par une chaîne hydrocarbonée, linéaire ou ramifiée comportant des groupements -O-, -OH, -NCO-, -COO-, -COOH , -CONH₂, -CONHR"' (où R"' est un radical (C₁-C₃) alkyle), -NH-, -S-, -SO₃H, formée d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10.000, de préférence entre 300 et 3000,
iv) 0 à 80 % massique, de préférence 0 à 40 %, d'un ou plusieurs monomère(s) contenant au moins un groupement susceptible d'être engagé dans une réaction de couplage, et,
v) 0 à 76 % massique, de préférence 0 à 28 %, d'un ou plusieurs monomère(s) éthylénique(s) insaturé(s) pouvant contenir jusqu'à 25 atomes de carbone, hormis les monomères déjà cités en i),
étant entendu que si l'une des teneurs massiques des composés définis en i), ii) et/ou iii) est nulle, la teneur massique des composés définis en iv) est différente de 0, et
2) greffage sur cette chaîne préformée de :
vi) 0 à 80 % massique, de préférence 0 à 40 %, d' une ou plusieurs molécule(s) dérivant d'un composé comportant au moins un groupement azoté basique hétérocyclique, -NH₂, -NHR ou -NR₂ (où R est un radical (C₁-C₆) alkyle), et contenant au moins un groupement susceptible d'être engagé dans une réaction de couplage, et
vii) 0 à 90% massique, de préférence 0 à 80% massique, d'un ou plusieurs télomère(s) représenté(s) par la formule :
G-R₇
où G représente un groupement contenant un atome d'hydrogène réactif, -OH, -COOH, -SH, -NH₂, -NHR"' (où R"' est un radical (C₁-C₃) alkyle), et R₇ est tel que défini ci-dessus, et
viii) 0 à 90 % massique, de préférence 0 à 70 %, d'un ou plusieurs télomère(s) représenté(s) par la formule
G-R₈
où G et R₈ sont tels que définis ci-dessus,
étant entendu que :
- les teneurs massiques des composés définis en i) et en vi) ne peuvent être simultanément égales à 0, et lorsque l'une d'entre-elles est égale à 0, alors l'autre est égale à au moins 1 % ,
- les teneurs massiques des composés définis en ii) et en vii) ne peuvent être simultanément égales à 0, et lorsque l'une d'entre-elles est égale à 0, alors l'autre est égale à au moins 10 % ,
- les teneurs massiques des composés définis en iii) et en viii) ne peuvent être simultanément égales à 0, et lorsque l'une d'entre-elles est égale à 0, alors l'autre est égale à au moins 10 % .

11. Procédé de préparation d'un copolymère greffé selon la revendication 3, dans lequel la chaîne principale est une séquence à caractère hydrophobe, caractérisé en ce qu'on effectue la copolymérisation radicalaire de :
i) 10 à 90 % massique, de préférence 25 à 80 % massique, d'un ou plusieurs monomère(s) à caractère hydrophobe comportant au moins un groupement aromatique, -COO-, -F, ou -Si(OR')n(R")₂- (où R et R" représentent des radicaux alkyle ou aryle, identiques ou différents, en C₁-C₁₀, et n = 0 à 2) constituant après polymérisation une chaîne formée d' unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
ii) 0 à 90 % massique, de préférence 0 à 70 % massique, d'un ou plusieurs macromonomère(s) représenté(s) par la formule : 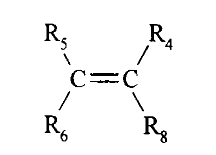 où
R₄, R₅, R₆ sont tels que définis ci-dessus, et
R₈ est une séquence à caractère hydrophile, constituée par une chaîne hydrocarbonée, linéaire ou ramifiée comportant des groupements -O-, -OH, -NCO-, -COO-, -COOH , -CONH₂, -CONHR''' (où R"' est un radical (C₁-C₃) alkyle), -NH-, -S-, -SO₃H, formée d'unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000, et
iii) 0 à 80 % massique, de préférence 0 à 40 % massique, d'un ou plusieurs macromonomère(s) représenté(s) par la formule : 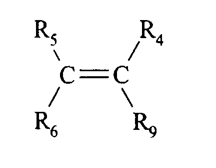 où
R₄, R₅, R₆, sont tels que définis ci-dessus, et
R₉ est une séquence d'ancrage, constituée par une chaîne hydrocarbonée, linéaire ou ramifiée, cycloalkyle ou aromatique, comportant des groupements azotés basiques de type: hétérocycliques, -NH₂, -NH-, -NHR, -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H), pouvant comporter des groupements -COO-, et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %, et
iv) 0 à 80 % massique, de préférence 0 à 40 %, d'un ou plusieurs monomère(s) contenant au moins un groupement susceptible d'être engagé dans une réaction de couplage,
étant entendu que si l'une des teneurs massiques des composés définis en i), ii) et/ou iii) est nulle, la teneur massique des composés définis en iv) est différente de 0, et
2) greffage sur cette chaîne préformée de :
v) 0 à 90 % massique, de préférence 0 à 70 %, d'un ou plusieurs télomère(s) représenté(s) par la formule
G-R₈
où G représente un groupement contenant un atome d'hydrogène réactif, -OH, -COOH, -SH, -NH₂, -NHR"' (où R"' est un radical (C₁-C₃) alkyle), et R₈ est tel que défini ci-dessus,et
vi) 0 à 80 % massique , de préférence 0 à 40 %, d'un ou plusieurs télomère(s) représenté(s) par la formule
G-R₉
où G et R₉ sont tels que définis ci-dessus,
étant entendu que :
- les teneurs massiques des composés définis en ii) et en v) ne peuvent être simultanément égales à 0, et lorsque l'une d'entre-elles est égale à 0, alors l'autre est égale à au moins 10 % ,
- les teneurs massiques des composés définis en iii) et en vi) ne peuvent être simultanément égales à 0, et lorsque l'une d'entre-elles est égale à 0, alors l'autre est égale à au moins 1 % .

12. Procédé de préparation d' un copolymère selon la revendication 4, dans lequel la chaîne principale est une séquence à caractère hydrophile, caractérisé en ce qu'on effectue la copolymérisation radicalaire de :
i) 10 à 90 % massique, de préférence 15 à 70 % massique, d'un ou plusieurs monomère(s) à caractère hydrophile comportant au moins un groupement -O-, -OH-,-COOH, -NCO-, -COO-, -SO₃H, -CONH₂, -CONHR"' (où R"' est un radical (C₁-C₃) alkyle), et constituant après polymérisation une chaîne formée d' unités monomère dont le paramètre de solubilité est supérieur à 22 J^{1/2}/cm^{3/2}, de préférence supérieur à 22,5 J^{1/2}/cm^{3/2}, et dont la masse moléculaire est comprise entre 250 et 10 000, de préférence entre 300 et 3 000, et
ii) 0 à 90 % massique, de préférence 0 à 80% massique, d'un ou plusieurs macromonomère(s) représenté(s) par la formule : 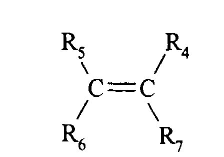 où
R₄, R₅, R₆, identiques ou différents, représentent un atome d'hydrogène ou un radical (C₁-C₄) alkyle,
R₇ est une séquence à caractère hydrophobe, constituée par une chaîne hydrocarbonée, linéaire ou ramifiée, cycloalkyle ou aromatique, pouvant comporter des groupements -COO-, -S-, -F, -Si(OR')ₙ(R")₂₋ₙ- (où R' et R" représentent des radicaux alkyles ou aryles, semblables ou différents, en C₁-C₁₀ , et n = 0 à 2), formée d'unités monomère dont le paramètre de solubilité est inférieur ou égal à 21,5 J^{1/2}/cm^{3/2}, de préférence inférieur à 19 J^{1/2}/cm^{3/2}, et dont la masse moléculaire est comprise entre 250 et 10 000, de préférence entre 500 et 3 500, et
iii) 0 à 80 % massique, de préférence 0 à 40 % massique, d'un ou plusieurs macromonomère(s) représenté(s) par la formule : 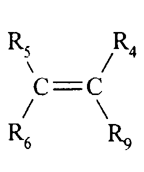 où
R₄, R₅, R₆, sont tels que définis ci-dessus, et
R₉ est une séquence d'ancrage, constituée par une chaîne hydrocarbonée, linéaire ou ramifiée, cycloalkyle ou aromatique, comportant des groupements azotés basiques de type : hétérocycliques, -NH₂, -NH-, -NHR, -NR₂, -CONH₂, -CONHR, -CONR₂ (où R est un radical (C₁-C₆) alkyle, optionnellement substitué par un ou plusieurs groupement(s) -OH, -COO-, -CO-, -O-, -SO₃H), pouvant comporter des groupements -COO-, et dont la masse moléculaire est comprise entre 150 et 10 000, de préférence entre 300 et 3 000, la teneur massique en monomères azotés basiques dans la chaîne d'ancrage étant au minimum de 5 %, et de préférence de 30 %, et
iv) 0 à 80 % massique, de préférence 0 à 40 %, d'un ou plusieurs monomère(s) contenant au moins un groupement susceptible d'être engagé dans une réaction de couplage,
étant entendu que si l'une des teneurs massiques des composés définis en i), ii) et/ou iii) est nulle, la teneur massique des composés définis en iv) est différente de 0, et
2) greffage sur cette chaîne préformée de :
v) 0 à 90% massique, de préférence 0 à 80% massique, d'un ou plusieurs télomère(s) représenté(s) par la formule :
G-R₇
où G représente un groupement contenant un atome d'hydrogène réactif, -OH, -COOH, -SH, -NH₂, -NHR"' (où R"' est un radical (C₁-C₃) alkyle), et R₇ est tel que défini ci-dessus, et
vi) 0 à 80 % massique , de préférence 0 à 40 %, d'un ou plusieurs télomère(s) représenté(s) par la formule
G-R₉
où G et R₉ sont tels que définis ci-dessus,
étant entendu que :
- les teneurs massiques des composés définis en ii) et en v) ne peuvent être simultanément égales à 0, et lorsque l'une d'entre-elles est égale à 0, alors l'autre est égale à au moins 10 % ,
- les teneurs massiques des composés définis en iii) et en vi) ne peuvent être simultanément égales à 0, et lorsque l'une d'entre-elles est égale à 0, alors l'autre est égale à au moins 1 % .

13. Procédé selon l'une quelconque des revendications 10 à 12, caractérisé en ce que la copolymérisation radicalaire est effectuée à une température comprise entre 50 °C et 140 °C, et la réaction de greffage à une température comprise entre 20 °C et 150 °C.

14. Procédé selon l'une quelconque des revendications 10 à 13, caractérisé en ce que l'ordre d'addition des monomères lors de la copolymérisation radicalaire est le suivant :
- les macromonomères, de masse moléculaire élevée et de ce fait moins réactifs, sont incorporés dès le départ dans le réacteur, avec le solvant,
- le ou les comonomères constituant la chaîne principale, plus réactifs, sont introduits en continu au cours du temps, de manière à ce que leur concentration soit toujours faible par rapport à celle des macromonomères.

15. Procédé selon l'une quelconque des revendications 10 à 14, caractérisé en ce que la copolymérisation radicalaire et/ou le greffage de télomères fonctionnalisés est (sont) réalisé(s) en présence d'un solvant ou d'un mélange de solvants choisis parmi les hydrocarbures aromatiques, les ethers, les cétones et les esters, de préférence la dioxane, le tétrahydrofurane et le toluène.

16. Une composition contenant un ou plusieurs copolymère(s) selon l'une quelconque des revendications 1 à 9, au moins un pigment et/ou une charge et/ou un solide fibreux, et optionnellement un solvant organique ou de l'eau.

17. Un pigment ou une charge ou un solide fibreux enrobé à partir d'une composition contenant un ou plusieurs copolymère(s) selon l'une des revendications 1 à 9.

18. Une peinture ou une encre contenant un ou plusieurs copolymère(s) selon l'une des revendications 1 à 9.

19. Utilisation d'un ou plusieurs copolymère(s) selon l'une quelconque des revendications 1 à 9, en tant qu'agent dispersant de particules solides dans un milieu aqueux et/ou organique.

20. Utilisation d'un ou plusieurs copolymère(s) selon l'une quelconque des revendications 1 à 9, en tant qu'agent stabilisant de particules solides dans un milieu aqueux et/ou organique.

21. Utilisation d'un ou plusieurs copolymère(s) selon l'une quelconque des revendications 1 à 9, en tant qu'agent émulsifiant.

22. Utilisation selon l'une quelconque des revendications 19 à 21, pour la préparation de dispersions pigmentaires en milieu aqueux et/ou organique.

## Claims

1. Grafted copolymer comprising at least three sequences of distinct chemical nature, among which one or more sequence(s) for anchoring on the solid particles, one or more sequence(s) of hydrophobic character and one or more sequence(s) of hydrophilic character, constituted by:
1) 1 to 80% by mass, preferably 5 to 40% by mass, of one or more sequence(s) for anchoring on the solid particles, constituted by a cycloalkyl or aromatic straight or branched hydrocarbon chain comprising basic nitrogenous groups of the heterocyclic, -NH₂, -NH-, -NHR, or NR₂, -CONH₂, -CONHR, -CONR₂ type (where R is a (C₁-C₆) alkyl radical optionally substituted by one or more -OH, -COO-, -CO-, -O-, -SO₃H groups), which may comprise -COO- groups, and whose molar mass is included between 150 and 10,000, preferably between 300 and 3000, the content by mass of basic nitrogenous monomers in the anchoring chain being 5% minimum and preferably 30%, and
2) at least 10% by mass, preferably 25 to 80% by mass, of one or more sequence(s) of hydrophobic character, constituted by a cycloalkyl or aromatic straight or branched hydrocarbon chain which may comprise -COO-, -S-, -F, -Si(OR')ₙ(R")₂₋ₙ- groups (where R' and R" represent similar or different alkyl or aryl radicals in C₁-C₁₀, and n = 0 to 2), formed by monomer units of which the parameter of solubility is less than or equal to 21.5 J^{1/2}/cm^{3/2}, preferably less than 19 J^{1/2}/cm^{3/2}, and of which the molar mass is included between 250 and 10,000, preferably between 500 and 3500, and
3) at least 10% by mass, preferably 15 to 70% by mass, of one or more sequence(s) of hydrophilic character, constituted by a straight or branched hydrocarbon chain comprising -O-, -OH, -NCO-, -COO-, -COOH, -CONH₂, -CONHR"' (where R"' is a (C₁-C₃) alkyl radical), -HN-, -S-, -SO₃H groups, formed by monomer units of which the parameter of solubility is greater than 22 J^{1/2}/cm^{3/2}, preferably greater than 22.5 J^{1/2}/cm^{3/2} and whose molar mass is included between 250 and 10,000, preferably between 300 and 3000.

2. Copolymer according to Claim 1, in which the principal chain is a sequence of anchoring on the solid particles constituted by a cycloalkyl or aromatic straight or branched hydrocarbon chain comprising basic nitrogenous groups of the heterocyclic, -NH₂, -NH-, -NHR, -NR₂, -CONH₂, -CONHR, -CONR₂ type (where R is a (C₁-C₆) alkyl radical, optionally substituted by one or more -OH, -COO-, -CO-, -O-, -SO₃H groups) which may comprise -COO- groups, and whose molar mass is included between 150 and 10,000, preferably between 300 and 3000, the content by mass of basic nitrogenous monomers in the anchoring chain being 5% minimum and preferably 30%.

3. Copolymer according to Claim 1, in which the principal chain is a sequence of hydrophobic character constituted by a cycloalkyl or aromatic straight or branched hydrocarbon chain which may comprise -COO-, -S-, -F, -Si(OR')ₙ(R")₂₋ₙ- groups (where R' and R" represent similar or different alkyl or aryl radicals in C₁-C₁₀, and n = 0 to 2), formed by monomer units whose parameter of solubility is less than or equal to 21.5 J^{1/2}/cm^{3/2}, preferably less than 19 J^{1/2}/cm^{3/2}, and whose molar mass is included between 250 and 10,000, preferably between 500 and 3500.

4. Copolymer according to Claim 1, in which the principal chain is a sequence of hydrophilic character, constituted by a straight or branched hydrocarbon chain comprising -O-, -OH, -NCO-, -COO-,-COOH, -CONH₂, -CONHR"' (where R"' is a (C₁-C₃) alkyl radical), -SO₃H groups, formed by monomer units whose parameter of solubility is greater than 22 J^{1/2}/cm^{3/2}, preferably greater than 22.5 J^{1/2}/cm^{3/2}, and whose molar mass is included between 250 and 10,000, preferably between 300 and 3000.

5. Copolymer according to any one of Claims 1 to 4, in the form of one of its salts, obtained by quaternization or neutralization of the basic functions.

6. Copolymer according to any one of Claims 1 to 5, characterized in that the anchoring sequence comprises basic nitrogenous groups introduced from one or more compounds selected from:
a) vinylpyridines, such as 2-vinylpyridine, 3-vinylpyridine, 4-vinylpyridine or 2-methyl-5-vinylpyridine,
- vinylimidazole, 2-methyl-N-vinylimidazole, vinylcarbazole, N-vinylpyrrolidone, 3-methyl-N-vinylpyrazole, 4-methyl-5-vinylthiazole, N-vinylcaprolactam, ethylimidazolidone methacrylate,
- (meth)acrylamides, such as (meth)acrylamide, N-methylacrylamide, N-isopropylacrylamide and N,N-dimethylacrylamide,
- N-methylol(meth)acrylamide, N,N-dimethylol(meth)acrylamide, 2-acrylamido-2-methyl-1-propanesulfonic acid, diacetone acrylamide, methyl-2-acrylamido-2-methoxyacetate, N-tris(hydroxymethyl)methylacrylamide,
- aminoalkyl(meth)acrylates of following formula: 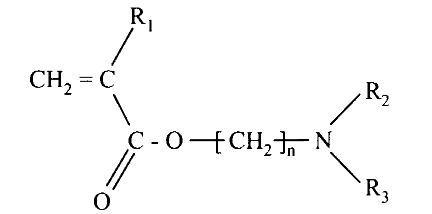 where R₁ is an atom of hydrogen or a (C₁-C₄) alkyl radical; R₂ and R₃, identical or different, each represent a (C₁-C₆) alkyl radical, n = 0 to 6,
said nitrogenous groups being in this first case introduced by radical copolymerization of one or more unsaturated ethylene monomer(s) cited above, and
b) N-N-diethyl-1,4-butanediamine, 1-(2-aminoethyl)-piperazine,2-(1-pyrrolidyl)-ethylamine, 4-amino-2-methoxy-pyrimidine, 2-dimethylaminoethanol, 1-(2-hydroxyethyl)-piperazine, 4-(2-hydroxyethyl)-morpholine, 2-mercaptopyrimidine, 2-mercaptobenzimidazole, N,N-dimethyl-1,3-propanediamine, 4-(2-aminoethyl)-pyridine, N-N-diallylmelamine, 3-amino-1,2,4-triazole, 1-(3-aminopropyl)-imidazole, 4-(2-hydroxyethyl)-pyridine, 1-(2-hydroxyethyl)-imidazole, 3-mercapto-1,2,4-triazole, said nitrogenous groups being in this second case fixed on a straight or grafted copolymer, putting to good use the reactive functions introduced along the preformed chain.

7. Copolymer according to any one of Claims 1 to 6, characterized in that the sequence(s) of hydrophobic character are constituted from monomer units selected from:
- the esters of (meth)acrylic acid such as methyl (meth)acrylate, ethyl (meth)acrylate, propyl (meth)acrylate, butyl (meth)acrylate, hexyl (meth)acrylate, cyclohexyl (meth)acrylate, ethylhexyl (meth)acrylate, octyl (meth)acrylate, nonyl (meth)acrylate, isodecyl (meth)acrylate, lauryl (meth)acrylate, stearyl (meth)acrylate, pentadecyl (meth)acrylate, cetyl (meth)acrylate, behenyl (meth)acrylate, 3-(trimethoxysilyl)propyl (meth)acrylate,
- the vinylic esters such as vinyl acetate, vinyl propionate, vinyl butyrate, vinyl sorbate, vinyl hexanoate, vinyl ethylhexanoate, vinyl laurate, vinyl stearate,
- styrene and alkylstyrenes such as α-methylstyrene, vinyltoluene, tertiobutylstyrene,
- dienes such as butadiene, isoprene, which may be hydrogenated after polymerization,
- alkylenes such as ethylene, propylene,
- siloxanes such as dimethylsiloxane, diphenylsiloxane, methylphenylsiloxane,
- fluorinated compounds such as trifluoroethyl (meth)acrylate, pentafluoropropyl (meth)acrylate, heptafluorobutyl (meth)acrylate, octafluoropentyl (meth)acrylate, pentadecafluorooctyl (meth)acrylate, eicosafluoroundecyl (meth)acrylate, vinyl fluoride, tetrafluoroethylene, or from polycondensation products, polyesters or polyamides.

8. Copolymer according to any one of Claims 1 to 7, characterized in that the sequence(s) of hydrophilic character are constituted from monomer units selected from:
- ethylene oxide,
- (meth)acrylic acids, maleic acid, fumaric acid, itaconic acid,
- derivatives of acrylamide such as (meth)acrylamide, N-methylacrylamide, N-isopropylacrylamide,
- ethyleneimine - vinylic alcohol,
- vinylpyrrolidone, vinylmethyloxazolidone,
- vinylsulfonate,
- sodium methallylsulfonate,
- glycerol methacrylate.

9. Copolymer according to Claim 1, comprising
- a principal chain for anchoring on the solid particles comprising dialkylaminoethyl (meth)acrylate, N-N-dimethylacrylamide, 2-vinylpyridine, 4-vinylpyridine groups, alone or in admixture,
- one or more poly(ethylene oxide) hydrophilic grafts, and
- one or more hydrophobic grafts based on alkyl (meth)acrylates, vinylic esters alone or copolymerized with styrene or alkylstyrene derivatives, fluorinated monomers such as trifluoroethyl methacrylate or 3-(trimethoxysilyl)propyl methacrylate.

10. Process for preparing a grafted copolymer according to Claim 2, in which the principal chain is an anchoring sequence, characterized in that one effects:
1) the radical copolymerization of:
i) 0 to 80% by mass, preferably 0 to 40% by mass, of one or more monomers comprising at least one basic nitrogenous group of the heterocyclic, -NH₂, -NHR, NR₂, -CONH₂, CONHR, -CONR₂ type (where R is a (C₁-C₆) alkyl radical optionally substituted by one or more -COO-,-CO-, -O-, -OH, -SO₃H groups) and
ii) 0 to 90% by mass, preferably 0 to 80% by mass, of one or more macromonomers represented by the formula: 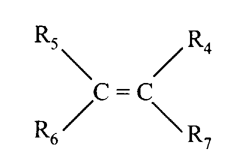 where
R₄, R₅, R₆, identical or different, represent an atom of hydrogen or a (C₁-C₄) alkyl radical,
R₇ is a sequence of hydrophobic character, constituted by a cycloalkyl or aromatic straight or branched hydrocarbon chain which may comprise -COO-, -S-, -F, -Si(OR')ₙ(R")₂₋ₙ- groups (where R' and R" represent similar or different alkyl or aryl radicals in C₁-C₁₀, and n = 0 to 2), formed by monomer units of which the parameter of solubility is less than or equal to 21.5 J^{1/2}/m^{3/2}, preferably less than 19 J^{1/2}/cm^{3/2}, and whose molar mass is included between 250 and 10,000, preferably between 500 and 3500, and
iii) 0 to 90% by mass, preferably 0 to 70% by mass, of one or more macromonomer(s) represented by the formula: 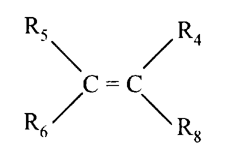 where
R₄, R₅, R₆ are as defined hereinabove, and
R₈ is a sequence of hydrophilic character, constituted by a straight or branched hydrocarbon chain, comprising -O-, -OH, -NCO-, -COO-, -COOH, -CONH₂, -CONHR"' (where R"' is a (C₁-C₃) alkyl radical), -NH-, -S-, -SO₃H groups, formed by monomer units whose parameter of solubility is greater than 22 J^{1/2}/cm^{3/2}, preferably greater than 22.5 J^{1/2}/cm^{3/2}, and whose molar mass is included between 250 and 10,000, preferably between 300 and 3000.
iv) 0 to 80% by mass, preferably 0 to 40%, of one or more monomers containing at least one group capable of being engaged in a coupling reaction, and
v) 0 to 76% by mass, preferably 0 to 28%, of one or more unsaturated ethylene monomer(s) able to contain up to 25 atoms of carbon, apart from the monomers already cited in i),
it being understood that if one of the contents by mass of the compounds defined in i), ii) and/or iii) is zero, the content by mass of the compounds defined in iv) is different from 0,
and
2) grafting on this preformed chain of:
vi) 0 to 80% by mass, preferably 0 to 40%, of one or more molecules deriving from a compound comprising at least one basic nitrogenous heterocyclic, -NH₂, -NHR or NR₂ group (where R is a (C₁-C₆) alkyl radical) and containing at least one group capable of being engaged in a coupling reaction, and
vii) 0 to 90% by mass, preferably 0 to 80% by mass, of one or more telomer(s) represented by the formula:
G-R₇
where G represents a group containing an atom of reactive hydrogen, -OH, -COOH, -SH, -NH₂, -NHR"' (where R"' is a a (C₁-C₃) alkyl radical, and R₇ is as defined hereinabove, and
viii) 0 to 90% by mass, preferably 0 to 70%, of one or more telomer(s) represented by the formula
G-R₈
where G and R₈ are as defined hereinabove,
it being understood that:
- the contents by mass of the compounds defined in i) and in vi) cannot be simultaneously equal to 0, and when one of them is equal to 0, then the other is equal to at least 1 %,
- the contents by mass of the compounds defined in ii) and in vii) cannot be simultaneously equal to 0, and when one of them is equel to 0, then the other is equal to at least 10%,
- the contents by mass of the compounds defined in iii) and in viii) cannot be simultaneously equal to 0, and when one of them is equel to 0, then the other is equal to at least 10%.

11. Process for preparing a grafted copolymer according to Claim 3, in which the principal chain is a sequence of hydrophobic character, characterized in that the radical copolymerization is effected of:
i) 10 to 90% by mass, preferably 25 to 80% by mass, of one or more monomer(s) of hydrophobic character comprising at least one aromatic, -COO-, -F or -Si(OR')n(R")₂- group (where R' and R" represent identical or different alkyl or aryl radicals in C₁-C₁₀, and n = 0 to 2), constituting after polymerization a chain formed by monomer units of which the parameter of solubility is less than or equal to 21.5 J^{1/2}/cm^{3/2}, preferably less than 19 J^{1/2}/cm^{3/2}, and whose molar mass is included between 250 and 10,000, preferably between 500 and 3500, and
ii) 0 to 90% by mass, preferably 0 to 70% by mass, of one or more macromonomer(s) represented by the formula 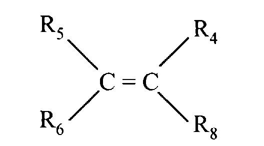 where R₄, R₅, R₆ are as defined hereinabove, and
R₈ is a sequence of hydrophilic character, constituted by a straight or branched hydrocarbon chain comprising -O-, -OH, -NCO-, -COO-, -COOH, -CONH₂, CONHR"' (where R"' is a (C₁-C₃) alkyl radical), -NH-, -S-, -SO₃H groups, formed by monomer units of which the parameter of solubility is greater than 22 J^{1/2}/cm^{3/2}, preferably greater than 22.5 J^{1/2}/cm^{3/2}, and whose molar mass is included between 250 and 10,000, preferably between 300 and 3000, and
iii) 0 to 80% by mass, preferably 0 to 40% by mass, of one or more macromonomer(s) represented by the formula: 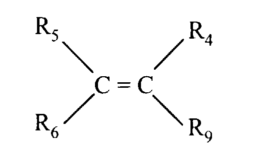 where
R₄, R₅, R₆ are as defined hereinabove, and
R₉ is an anchoring sequence, constituted by a cycloalkyl or aromatic straight or branched hydrocarbon chain comprising basic nitrogenous groups of the heterocyclic, -NH₂, -NH-, -NHR, -NR₂, -CONH₂, -CONHR, -CONR₂ type (where R is a (C₁-C₆) alkyl radical optionally substituted by one or more -OH, -COO- -CO-, -O-, -SO₃H groups) which may comprise -COO- groups, and whose molecular mass is included between 150 and 10,000, preferably between 300 and 3000, the content by mass of basic nitrogenous monomers in the anchoring chain being 5% minimum and preferably 30%, and
iv) 0 to 80% by mass, preferably 0 to 40%, of one or more monomer(s) containing at least one group capable of being engaged in a coupling reaction,
it being understood that if one of the contents by mass of the compounds defined in i), ii) and/or iii) is zero, the content by mass of the compounds defined in iv) is different from 0, and
2) grafting on this preformed chain of:
v) 0 to 90% by mass, preferably 0 to 70%, of one or more telomer(s) represented by the formula:
G-R₈
where G represents a group containing an atom of reactive hydrogen, -OH, -COOH, -SH, -NH₂, -NHR"' (where R"' is a (C₁-C₃) alkyl radical), and R8 is as defined hereinabove, and
vi) 0 to 80% by mass, preferably 0 to 40%, of one or more telomer(s) represented by the formula
G-R₉
where G and R₉ are as defined hereinabove,
it being understood that:
- the contents by mass of the compounds defined in ii) and in v) cannot simultaneously be equal to 0, and when one of them is equal to 0, then the other is equel to at least 10%,
- the contents by mass of the compounds defined in iii) and in vi) cannot be simultaneously equal to 0, and when one of them is equal to 0, then the other is equal to at least 1%.

12. Process for preparing a copolymer according to Claim 4, in which the principal chain is a sequence of hydrophilic character, characterized in that the radical copolymerization is effected of:
i) 10 to 90% by mass, preferably 15 to 70% by mass, of one or more monomer(s) of hydrophilic character comprising at least one group -O-, -OH-, -COOH, -NCO-, -COO-, -SO₃H, -CONH₂, -CONHR"' (where R"' is a (C₁-C₃) alkyl radical) and constituting after polymerization a chain formed by monomer units of which the parameter of solubility is greater than 22 J^{1/2}/cm^{3/2}, preferably greater than 22.5 J^{1/2}/cm^{3/2}, and whose molar mass is included between 250 and 10,000, preferably between 300 and 3000, and
ii) 0 to 90% by mass, preferably 0 to 80% by mass, of one or more macromonomer(s) represented by the formula 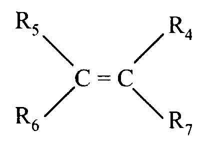 where
R₄, R₅, R₆, identical or different, represent an atom of hydrogen or a (C₁-C₄) alkyl radical,
R₇ is a sequence of hydrophobic character, constituted by a cycloalkyl or aromatic straight or branched hydrocarbon chain which may comprise -COO-, -S-, -F, -Si(OR')ₙ(R")₂₋ₙ- groups (where R' and R" represent similar or different alkyl or aryl radicals in C₁-C₁₀, and n = 0 to 2), formed by monomer units whose parameter of solubility is less than or equal to 21.5 J^{1/2}/cm^{3/2}, preferably less than 19 J^{1/2}/cm^{3/2}, and whose molar mass is included between 250 and 10,000, preferably between 500 and 3500, and
iii) 0 to 80% by mass, preferably 0 to 40% by mass, of one or more macromonomer(s) represented by the formula 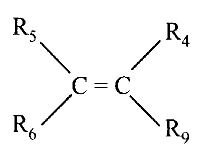 where
R₄, R₅, R₆ are as defined hereinabove and
R₉ is an anchoring sequence, constituted by a cycloalkyl or aromatic straight or branched hydrocarbon chain comprising basic nitrogenous groups of the heterocyclic, -NH₂, -NH-, -NHR, -NR₂, CONH₂, -CONHR, -CONR₂ type (where R is a (C₁-C₆) alkyl radical optionally substituted by one or more OH-, -COO-, -CO-, -O-, -SO₃H groups), which may comprise -COO- groups, and of which the molar mass is included betwen 150 and 10,000, preferably between 300 and 3000, the content by mass of basic nitrogenous monomers in the anchoring chain being 5% minimum and preferably 30%, and
iv) 0 to 80% by mass, preferably 0 to 40%, of one or more monomer(s) containing at least one group capable of being engaged in a coupling reaction,
it being understood that if one of the contents by mass of the compounds defined in i), ii) and/or iii) is zero, the content by mass of the compounds defined in iv) is different from 0, and
2) grafting on this preformed chain of:
v) 0 to 90% by mass, preferably 0 to 80% by mass, of one or more telomer(s) represented by the formula:
G-R₇
where G represents a group containing an atom of reactive hydrogen, -OH, -COOH, -SH, -NH₂, -NHR"' (where R"' is a (C₁-C₃) alkyl radical), and R₇ is as defined hereinabove, and
vi) 0 to 80% by mass, preferably 0 to 40%, of one or more telomer(s) represented by the formula
G-R₉
where G and R₉ are as defined hereinabove,
it being understood that:
- the contents by mass of the compounds defined in ii) and in v) cannot be simultaneously equal to 0, and when one of them is equal to 0, then the other is equal to at least 10%,
- the contents by mass of the compounds defined in iii) and in vi) cannot be simultaneously equal to 0, and when one of them is equal to 0, then the other is equal to at least 1 %.

13. Process according to any one of Claims 10 to 12, characterized in that the radical copolymerization is effected at a temperature included between 50°C and 140°C, and the grafting reaction at a temperature included between 20°C and 150°C.

14. Process according to any one of Claims 10 to 13, characterized in that the order of addition of the monomers during radical copolymerization is the following:
- the macromonomers, of high molar mass and consequently less reactive, are incorporated in the reactor, with the solvent, from the beginning,
- the more reactive comonomer(s) constituting the principal chain are continuously introduced in the course of time, so that their concentration is always weak with respect to that of the macromonomers.

15. Process according to any one of Claims 10 to 14, characterized in that the radical copolymerization and/or grafting of functionalized telomers is (are) effected in the presence of a solvent or of a mixture of solvents selected from aromatic hydrocarbons, ethers, ketones and esters, preferably dioxane, tetrahydrofuran and toluene.

16. A composition containing one or more copolymer(s) according to any one of Claims 1 to 9, at least one pigment and/or a filler and/or a fibrous solid, and optionally an organic solvent or water.

17. A pigment or a filler or a fibrous solid coated from a composition containing one or more copolymer(s) according to one of Claims 1 to 9.

18. A paint or an ink containing one or more copolymer(s) according to one of Claims 1 to 9.

19. Use of one or more copolymer(s) according to any one of Claims 1 to 9, as agent dispersing solid particles in an aqueous and/or organic medium.

20. Use of one or more copolymer(s) according to any one of Claims 1 to 9, as agent stabilizing solid particles in an aqueous and/or organic medium.

21. Use of one or more copolymer(s) according to any one of Claims 1 to 9, as emulsifying agent.

22. Use according to any one of Claims 19 to 21, for preparing pigmentary dispersions in aqueous and/or organic medium.

## Patentansprüche

1. Pfropfcopolymer, das mindestens drei Sequenzen chemisch unterschiedlicher Natur, unter diesen eine oder mehrere Sequenz(en) zur Verankerung auf den festen Teilchen, eine oder mehrere Sequenz(en) mit hydrophobem Charakter und eine oder mehrere Sequenz(en) mit hydrophilem Charakter, umfaßt, gebildet aus:
1) 1 bis 80 Masse-%, vorzugsweise 5 bis 40 Masse-% von einer oder mehreren Sequenz(en) zur Verankerung auf den festen Teilchen, die aus einer kohlenwasserstoffhaltigen, linearen oder verzweigten, Cycloalkyl- oder aromatischen Kette, die basische stickstoffhaltige Gruppen vom Typ: Heterocyclen, -NH₂, -NH-, -NHR oder -NR₂, -CONH₂, -CONHR, -CONR₂ (wobei R ein (C₁-C₆)-Alkylrest, gegebenenfalls substituiert durch eine oder mehrere Gruppe(n) -OH, -COO-, -CO-, -O-, -SO₃H, ist) umfaßt, gebildet wird oder werden, die Gruppen -COO- umfassen kann oder können und deren relative Molekülmasse zwischen 150 und 10000, vorzugsweise zwischen 300 und 3000 liegt, wobei der Massengehalt an basischen stickstoffhaltigen Monomeren in der Verankerungskette mindestens 5% und vorzugsweise mindestens 30% beträgt und
2) mindestens 10 Masse-%, vorzugsweise 25 bis 80 Masse-% von einer oder mehreren Sequenz(en) mit hydrophobem Charakter, die aus einer kohlenwasserstoffhaltigen, linearen oder verzweigten, Cycloalkyl- oder aromatischen Kette, die Gruppen -COO-, -S-, -F, -Si(OR')ₙ(R")₂₋ₙ- (wobei R' und R'' für C₁-C₁₀-Alkyl- oder -Arylreste, die gleich oder verschieden sind, stehen und n = 0 bis 2) enthalten kann, gebildet wird oder werden, die aus Monomereinheiten gebildet wird oder werden, deren Löslichkeitsparameter unter oder gleich 21,5 J^{1/2}/cm^{3/2}, vorzugsweise unter 19 J^{1/2}/cm^{3/2} ist, und deren relative Molekülmasse zwischen 250 und 10000, vorzugsweise zwischen 500 und 3500 liegt und
3) mindestens 10 Masse-%, vorzugsweise 15 bis 70 Masse-% von einer oder mehreren Sequenz(en) mit hydrophilem Charakter, die aus einer linearen oder verzweigten kohlenwasserstoffhaltigen Kette, die Gruppen -O-, -OH, -NCO-, -COO-, -COOH, -CONH₂, -CONHR''' (wobei R''' ein (C₁-C₃)-Alkylrest ist) , -NH-, -S-, -SO₃H umfaßt, gebildet wird oder werden, die aus Monomereinheiten gebildet wird oder werden, deren Löslichkeitsparameter über 22 J^{1/2}/cm^{3/2}, vorzugsweise über 22,5 J^{1/2}/cm^{3/2} liegt, und deren relative Molekülmasse zwischen 250 und 10000, vorzugsweise zwischen 300 und 3000 liegt.

2. Copolymer nach Anspruch 1, in dem die Hauptkette eine Sequenz zur Verankerung auf den festen Teilchen ist, die von einer kohlenwasserstoffhaltigen, linearen oder verzweigten, Cycloalkyl- oder aromatischen Kette, die basische stickstoffhaltige Gruppen vom Typ: Heterocyclen, -NH₂, -NH-, -NHR, -NR₂, -CONH₂, -CONHR, -CONR₂ (wobei R ein (C₁-C₆)-Alkylrest, gegebenenfalls substituiert durch eine oder mehrere Gruppe(n) -OH, -COO-, -CO-, -O-, -SO₃H, ist) umfaßt, gebildet wird, die Gruppen -COO- umfassen kann und deren relative Molekülmasse zwischen 150 und 10000, vorzugsweise zwischen 300 und 3000 liegt, wobei der Massengehalt an basischen stickstoffhaltigen Monomeren in der Verankerungskette mindestens 5% und vorzugsweise mindestens 30% beträgt.

3. Copolymer nach Anspruch 1, in dem die Hauptkette eine Sequenz mit hydrophobem Charakter ist, die aus einer kohlenwasserstoffhaltigen, linearen oder verzweigten, Cycloalkyl- oder aromatischen Kette, die Gruppen -COO-, -S-, -F, -Si(OR')ₙ(R")₂₋ₙ- (wobei R' und R'' für C₁-C₁₀-Alkyl- oder -Arylreste, die gleich oder verschieden sind, stehen und n = 0 bis 2) enthalten kann, gebildet wird, die aus Monomereinheiten gebildet wird, deren Löslichkeitsparameter unter oder gleich 21,5 J^{1/2}/cm^{3/2}, vorzugsweise unter 19 J^{1/2}/cm^{3/2} ist, und deren relative Molekülmasse zwischen 250 und 10000, vorzugsweise zwischen 500 und 3500 liegt.

4. Copolymer nach Anspruch 1, in dem die Hauptkette eine Sequenz mit hydrophilem Charakter ist, die aus einer linearen oder verzweigten kohlenwasserstoffhaltigen Kette, die Gruppen -O-, -OH, -NCO-, -COO-, -COOH, -CONH₂, -CONHR''' (wobei R''' ein (C₁-C₃)-Alkylrest ist), -SO₃H umfaßt, gebildet wird, die aus Monomereinheiten gebildet wird, deren Löslichkeitsparameter über 22 J^{1/2}/cm^{3/2}, vorzugsweise über 22,5 J^{1/2}/cm^{3/2}) liegt, und deren relative Molekülmasse zwischen 250 und 10000, vorzugsweise zwischen 300 und 3000 liegt.

5. Copolymer nach einem der Ansprüche 1 bis 4 in Form von einem seiner Salze, erhalten durch Quaternisierung oder Neutralisierung der basischen Funktionen.

6. Copolymer nach einem der Ansprüche 1 bis 5, dadurch gekennzeichnet, daß die Verankerungssequenz stickstoffhaltige basische Gruppen umfaßt, die eingeführt worden sind ausgehend von einer oder mehreren Verbindung(en), ausgewählt unter:
a) - den Vinylpyridinen, wie 2-Vinylpyridin, 3-Vinylpyridin, 4-Vinylpyridin oder 2-Methyl-5-vinylpyridin,
- Vinylimidazol, 2-Methyl-N-vinylimidazol, Vinylcarbazol, N-Vinylpyrrolidon, 3-Methyl-N-vinylpyrazol, 4-Methyl-5-vinylthiazol, N-Vinylcaprolactam, Ethylimidazolidonmethacrylat,
- den (Meth)acrylamiden, wie (Meth)acrylamid, N-Methylacrylamid, N-Isopropylacrylamid und N,N-Dimethylacrylamid,
- N-Methylol(meth)acrylamid, N,N-Dimethylol(meth)acrylamid, 2-Acrylamido-2-methyl-1-propansulfonsäure, Acrylamiddiaceton, Methyl-2-acrylamido-2-methoxyacetat, N-Tris(hydroxymethyl)methylacrylamid,
- den Aminoalkyl(meth)acrylaten der folgenden Formel: 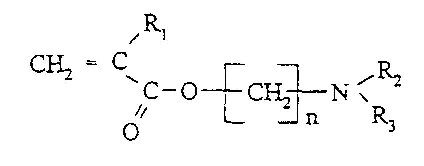 worin R₁ ein Wasserstoffatom oder ein (C₁-C₄)-Alkylrest ist; R₂ und R₃, die gleich oder verschieden sind, jeweils für einen (C₁-C₆)-Alkylrest stehen,
n = 0 bis 6,
wobei die stickstoffhaltigen Gruppen in diesem ersten Fall durch radikalische Copolymerisation von einem oder mehreren ethylenisch ungesättigten Monomer(en), die oben aufgeführt worden sind, eingeführt worden sind, und
b) N,N-Diethyl-1,4-butandiamin, 1-(2-Aminoethyl)-piperazin, 2-(1-Pyrrolidyl)ethylamin, 4-Amino-2-methoxypyrimidin, 2-Dimethylaminoethanol, 1-(2-Hydroxyethyl)-piperazin, 4-(2-Hydroxyethyl)-morpholin, 2-Mercaptopyrimidin, 2-Mercaptobenzimidazol, N,N-Dimethyl-1,3-propandiamin, 4-(2-Aminoethyl)-pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)-imidazol, 3-Mercapto-1,2,4-triazol, wobei die stickstoffhaltigen Gruppen in diesem zweiten Fall an ein lineares Copolymer oder Pfropfcopolymer angefügt worden sind, indem reaktive Funktionen, die entlang der vorab gebildeten Kette eingeführt worden sind, ausgenützt werden.

7. Copolymer nach einem der Ansprüche 1 bis 6, dadurch gekennzeichnet, daß die Sequenz(en) mit hydrophobem Charakter ausgehend von Monomereinheiten, ausgewählt unter: - den Estern von (Meth)acrylsäure, wie Methyl(meth)acrylat, Ethyl(meth)acrylat, Propyl(meth)acrylat, Butyl(meth)acrylat, Hexyl(meth)acrylat, Cyclohexyl(meth)acrylat, Ethylhexyl(meth)acrylat, Octyl(meth)acrylat, Nonyl(meth)acrylat, Isodecyl(meth)acrylat, Lauryl(meth)acrylat, Stearyl(meth)acrylat, Pentadecyl(meth)acrylat, Cetyl(meth)acrylat, Behenyl(meth)acrylat, 3-(Trimethoxysilyl)propyl(meth)acrylat,
- den Vinylestern, wie Vinylacetat, Vinylpropionat, Vinylbutyrat, Vinylsorbat, Vinylhexanoat, Vinylethylhexanoat, Vinyllaurat, Vinylstearat,
- Styrol und den Alkylstyrolen, wie α-Methylstyrol, Vinyltoluol, tert.-Butylstyrol,
- den Dienen, wie Butadien, Isopren, die nach einer Polymerisation hydriert werden können,
- den Alkylenen, wie Ethylen, Propylen,
- den Siloxanen, wie Dimethylsiloxan, Diphenylsiloxan, Methylphenylsiloxan,
- den fluorhaltigen Verbindungen, wie Trifluorethyl(meth)acrylat, Pentafluorpropyl(meth)acrylat, Heptafluorbutyl(meth)acrylat, Octafluorpentyl(meth)acrylat, Pentadecafluoroctyl (meth) acrylat, Eicosafluorundecyl(meth)acrylat, Vinylfluorid, Tetrafluorethylen,
oder Polykondensationsprodukten, Polyestern oder Polyamiden,
gebildet wird oder werden.

8. Copolymer nach einem der Ansprüche 1 bis 7, dadurch gekennzeichnet, daß die Sequenz(en) mit hydrophilem Charakter ausgehend von Monomereinheiten, ausgewählt unter:
- Ethylenoxid,
- den (Meth)acrylsäuren, Maleinsäure, Fumarsäure, Itaconsäure,
- den Acrylamidderivaten, wie (Meth)acrylamid, N-Methylacrylamid, N-Isopropylacrylamid,
- Ethylenimin,
- Vinylalkohol,
- Vinylpyrrolidon, Vinylmethyloxazolidon,
- Vinylsulfonat,
- Natriummethallylsulfonat,
- Glycerolmethacrylat,
gebildet wird oder werden.

9. Copolymer nach Anspruch 1, umfassend:
- eine Hauptkette zur Verankerung auf den festen Teilchen, die Dialkylaminoethyl(meth)acrylat-, N,N-Dimethylacrylamid-, 2-Vinylpyridin-, 4-Vinylpyridingruppen, allein oder in einer Mischung, umfaßt,
- eine oder mehrere gepfropfte hydrophile Poly(ethylenoxid)-seitenketten und
- eine oder mehrere gepfropfte hydrophobe Seitenketten auf Grundlage von Alkyl(meth)acrylaten, von Vinylestern allein oder copolymerisiert mit Styrol- oder Alkylstyrolderivaten, fluorhaltigen Monomeren, wie Trifluorethylmethacrylat, oder 3-(Trimethoxysilyl)propylmethacrylat.

10. Verfahren zur Herstellung eines Pfropfcopolymers nach Anspruch 2, in welchem die Hauptkette eine Verankerungssequenz ist, dadurch gekennzeichnet, daß man ausführt:
1) die radikalische Copolymerisation von:
i) 0 bis 80 Masse-%, vorzugsweise 0 bis 40 Masse-% von einem oder mehreren Monomer(en), umfassend mindestens eine basische stickstoffhaltige Gruppe vom Typ Heterocyclus, -NH₂, -NHR, -NR₂, -CONH₂, -CONHR, -CONR₂ (wobei R ein (C₁-C₆)-Alkylrest, gegebenenfalls substituiert durch eine oder mehrere Gruppe(n) -COO-, -CO-, -O-, -OH, -SO₃H, ist), und
ii) 0 bis 90 Masse-%, vorzugsweise 0 bis 80 Masse-% von einem oder mehreren Makromonomer(en), angegeben durch die Formel: 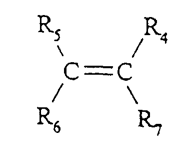 worin
R₄, R₅, R₆, die gleich oder verschieden sind, für ein Wasserstoffatom oder einen (C₁-C₄)-Alkylrest stehen,
R₇ eine Sequenz mit hydrophobem Charakter ist, die aus einer kohlenwasserstoffhaltigen, linearen oder verzweigten, Cycloalkyl- oder aromatischen Kette, die Gruppen -COO-, -S-, -F, -Si(OR')ₙ(R")₂₋ₙ- (wobei R' und R'' für C₁-C₁₀-Alkyl- oder -Arylreste, die gleich oder verschieden sind, stehen und n = 0 bis 2) enthalten kann, gebildet wird, die aus Monomereinheiten gebildet wird, deren Löslichkeitsparameter unter oder gleich 21,5 J^{1/2}/cm^{3/2}, vorzugsweise unter 19 J^{1/2}/cm^{3/2} ist, und deren relative Molekülmasse zwischen 250 und 10000, vorzugsweise zwischen 500 und 3500 liegt und
(iii) 0 bis 90 Masse-%, vorzugsweise 0 bis 70 Masse-% von einem oder mehreren Makromonomer(en), angegeben durch die Formel: 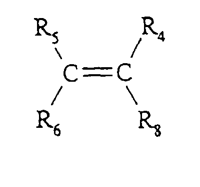 worin
R₄, R₅, R₆ wie oben definiert sind und
R₈ eine Sequenz mit hydrophilem Charakter ist, die aus einer linearen oder verzweigten kohlenwasserstoffhaltigen Kette, die Gruppen -O-, -OH, -NCO-, -COO-, -COOH, -CONH₂, -CONHR''' (wobei R''' ein (C₁-C₃)-Alkylrest ist), -NH-, -S-, -SO₃H umfaßt, gebildet wird, die aus Monomereinheiten gebildet wird, deren Löslichkeitsparameter über 22 J^{1/2}/cm^{3/2}, vorzugsweise über 22,5 J^{1/2}/cm^{3/2} liegt, und deren relative Molekülmasse zwischen 250 und 10000, vorzugsweise zwischen 300 und 3000 liegt,
(iv) 0 bis 80 Masse-%, vorzugsweise 0 bis 40 % von einem oder mehreren Monomer(en), das oder die mindestens eine Gruppe enthält bzw. enthalten, die an einer Kopplungsreaktion beteiligt sein kann, und
(v) 0 bis 76 Masse-%, vorzugsweise 0 bis 28% von einem oder mehreren ethylenisch ungesättigten Monomer(en), das oder die bis zu 25 Kohlenstoffatome enthalten kann bzw. können, außer den bereits unter i) zitierten Monomeren,
mit der Maßgabe, daß, wenn einer der Massengehalte der unter i), ii) und/oder iii) definierten Verbindungen Null ist, der Massengehalt der unter iv) definierten Verbindungen von 0 verschieden ist, und
2) Pfropfen an diese vorab gebildete Kette von:
vi) 0 bis 80 Masse-%, vorzugsweise 0 bis 40 Masse-% von einem oder mehreren Molekül(en), das oder die sich von einer Verbindung ableitet bzw. ableiten, die mindestens eine basische stickstoffhaltige heterocyclische Gruppe, -NH₂, -NHR oder -NR₂ (wobei R ein (C₁-C₆)-Alkylrest ist) -Gruppe umfaßt, und mindestens eine Gruppe enthält bzw. enthalten, die an einer Kopplungsreaktion beteiligt sein kann, und
vii) 0 bis 90 Masse-%, vorzugsweise 0 bis 80 Masse-% von einem oder mehreren Telomer(en), angegeben durch die Formel:
G-R₇
worin G für eine Gruppe steht, die ein reaktives Wasserstoffatom, -OH, -COOH, -SH, -NH₂, NHR''' (wobei R"' ein (C₁-C₃)-Alkylrest ist) enthält, und R₇ wie oben definiert ist, und
viii) 0 bis 90 Masse-%, vorzugsweise 0 bis 70 % von einem oder mehreren Telomer(en), angegeben durch die Formel:
G-R₈,
worin G und R₈ wie oben definiert sind,
mit der Maßgabe, daß:
- die Massengehalte der unter i) und unter vi) definierten Verbindungen nicht gleichzeitig 0 sein können und, wenn einer von diesen gleich 0 ist, der andere dann mindestens 1% ist,
- die Massengehalte der unter ii) und unter vii) definierten Verbindungen nicht gleichzeitig 0 sein können und, wenn einer von diesen gleich 0 ist, der andere dann mindestens 10% ist,
- die Massengehalte der unter iii) und unter viii) definierten Verbindungen nicht gleichzeitig 0 sein können und, wenn einer von diesen gleich 0 ist, der andere dann mindestens 10% ist.

11. Verfahren zur Herstellung eines Pfropfcopolymers nach Anspruch 3, in welchem die Hauptkette eine Sequenz mit hydrophobem Charakter ist, dadurch gekennzeichnet, daß man die radikalische Copolymerisation von:
i) 10 bis 90 Masse-%, vorzugsweise 25 bis 80 Masse-% von einem oder mehreren Monomer(en) mit hydrophobem Charakter, das oder die mindestens eine aromatische Gruppe, -COO-, -F oder -Si (OR')ₙ(R")₂- (wobei R und R'' für C₁-C₁₀-Alkyl- oder -Arylreste, die gleich oder verschieden sind, stehen und n = 0 bis 2) -Gruppe umfaßt bzw. umfassen, das oder die nach Polymerisation eine Kette bildet oder bilden, die aus Monomereinheiten gebildet wird, deren Löslichkeitsparameter unter oder gleich 21,5 J^{1/2}/cm^{3/2}, vorzugsweise unter 19 J^{1/2}/cm^{3/2} ist, und deren relative Molekülmasse zwischen 250 und 10000, vorzugsweise zwischen 500 und 3500 liegt, und
ii) 0 bis 90 Masse-%, vorzugsweise 0 bis 70 Masse-% von einem oder mehreren Makromonomer(en), angegeben durch die Formel: 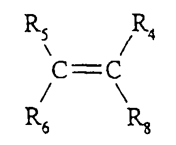 worin
R₄, R₅, R₆ wie oben definiert sind und
R₈ eine Sequenz mit hydrophilem Charakter ist, die aus einer linearen oder verzweigten kohlenwasserstoffhaltigen Kette, die Gruppen -O-, -OH, -NCO-, -COO-, -COOH, -CONH₂, -CONHR''' (wobei R''' ein (C₁-C₃)-Alkylrest ist), -NH-, -S-, -SO₃H umfaßt, gebildet wird, die aus Monomereinheiten gebildet wird, deren Löslichkeitsparameter über 22 J^{1/2}/cm^{3/2}, vorzugsweise über 22,5 J^{1/2}/cm^{3/2} liegt, und deren relative Molekülmasse zwischen 250 und 10000, vorzugsweise zwischen 300 und 3000 liegt,
(iii) 0 bis 80 Masse-%, vorzugsweise 0 bis 40 Masse-% von einem oder mehreren Makromonomer(en), angegeben durch die Formel: 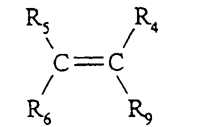 worin
R₄, R₅ und R₆ wie oben definiert sind und
R₉ eine Verankerungssequenz ist, die aus einer kohlenwasserstoffhaltigen, linearen oder verzweigten, Cycloalkyl- oder aromatischen Kette, die basische stickstoffhaltige Gruppen vom Typ: Heterocyclen, -NH₂, -NH-, -NHR, -NR₂, -CONH₂, -CONHR, -CONR₂ (wobei R ein (C₁-C₆)-Alkylrest, gegebenenfalls substituiert durch eine oder mehrere Gruppe(n) -OH, -COO-, -CO-, -O-, -SO₃H, ist) umfaßt, gebildet wird, die Gruppen -COO- umfassen kann und deren relative Molekülmasse zwischen 150 und 10000, vorzugsweise zwischen 300 und 3000 liegt, wobei der Massengehalt an basischen stickstoffhaltigen Monomeren in der Verankerungskette mindestens 5% und vorzugsweise mindestens 30% beträgt, und
(iv) 0 bis 80 Masse-%, vorzugsweise 0 bis 40 % von einem oder mehreren Monomer(en), das oder die mindestens eine Gruppe enthält bzw. enthalten, die an einer Kopplungsreaktion beteiligt sein kann,
mit der Maßgabe, daß, wenn einer der Massengehalte der unter i), ii) und/oder iii) definierten Verbindungen Null ist, der Massengehalt der unter iv) definierten Verbindungen von 0 verschieden ist, und
2) Pfropfen an diese vorab gebildete Kette von:
v) 0 bis 90 Masse-%, vorzugsweise 0 bis 70 % von einem oder mehreren Telomer(en), angegeben durch die Formel:
G-R₈
worin G für eine Gruppe steht, die ein reaktives Wasserstoffatom, -OH, -COOH, -SH, -NH₂, NHR''' (wobei R''' ein (C₁-C₃)-Alkylrest ist) enthält, und R₈ wie oben definiert ist, und
vi) 0 bis 80 Masse-%, vorzugsweise 0 bis 40 % von einem oder mehreren Telomer(en), angegeben durch die Formel:
G-R₉,
worin G und R₉ wie oben definiert sind,
ausführt,
mit der Maßgabe, daß:
- die Massengehalte der unter ii) und unter v) definierten Verbindungen nicht gleichzeitig 0 sein können und, wenn einer von diesen gleich 0 ist, der andere dann mindestens 10% ist,
- die Massengehalte der unter iii) und unter vi) definierten Verbindungen nicht gleichzeitig 0 sein können und, wenn einer von diesen gleich 0 ist, der andere dann mindestens 1% ist.

12. Verfahren zur Herstellung eines Copolymers nach Anspruch 4, in welchem die Hauptkette eine Sequenz mit hydrophilem Charakter ist, dadurch gekennzeichnet, daß man die radikalische Copolymersation von:
i) 10 bis 90 Massen-%, vorzugsweise 15 bis 70 Massen-% von einem oder mehreren Monomer(en) mit hydrophilem Charakter, das oder die mindestens eine Gruppe -O-, -OH, -COOH, -NCO-, -COO-, -SO₃H, -CONH₂, -CONHR''' (wobei R''' ein (C₁-C₃)-Alkylrest ist) umfaßt oder umfassen und nach Polymerisation eine Kette bildet oder bilden, die aus Monomereinheiten gebildet wird, deren Löslichkeitsparameter über 22 J^{1/2}/cm^{3/2}, vorzugsweise über 22,5 J^{1/2}/cm^{3/2} liegt, und deren relative Molekülmasse zwischen 250 und 10000, vorzugsweise zwischen 300 und 3000 liegt, und
ii) 0 bis 90 Masse-%, vorzugsweise 0 bis 80 Masse-% von einem oder mehreren Makromonomer(en), angegeben durch die Formel: 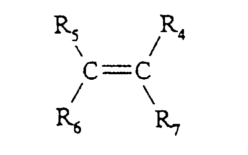 worin
R₄, R₅, R₆, die gleich oder verschieden sind, für ein Wasserstoffatom oder einen (C₁-C₄)-Alkylrest stehen,
R₇ eine Sequenz mit hydrophobem Charakter ist, die aus einer kohlenwasserstoffhaltigen, linearen oder verzweigten, Cycloalkyl- oder aromatischen Kette, die Gruppen -COO-, -S-, -F, -Si(OR')ₙ(R")₂₋ₙ- (wobei R' und R'' für C₁-C₁₀Alkyl- oder -Arylreste, die gleich oder verschieden sind, stehen und n = 0 bis 2) enthalten kann, gebildet wird, die aus Monomereinheiten gebildet wird, deren Löslichkeitsparameter unter oder gleich 21,5 J^{1/2}/cm^{3/2}, vorzugsweise unter 19 J^{1/2}/cm^{3/2} ist, und deren relative Molekülmasse zwischen 250 und 10000, vorzugsweise zwischen 500 und 3500 liegt, und
(iii) 0 bis 80 Masse-%, vorzugsweise 0 bis 40 Masse-% von einem oder mehreren Makromonomer(en), angegeben durch die Formel: 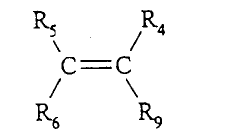 worin
R₄, R₅ und R₆ wie oben definiert sind und
R₉ eine Verankerungssequenz ist, die aus einer kohlenwasserstoffhaltigen, linearen oder verzweigten, Cycloalkyl- oder aromatischen Kette, die basische stickstoffhaltige Gruppen vom Typ: Heterocyclen, -NH₂, -NH-, -NHR, -NR₂, -CONH₂, -CONHR, -CONR₂ (wobei R ein (C₁-C₆)-Alkylrest, gegebenenfalls substituiert durch eine oder mehrere Gruppe(n) -OH, -COO-, -CO-, -O-, -SO₃H, ist) umfaßt, gebildet wird, die Gruppen -COO- umfassen kann und deren relative Molekülmasse zwischen 150 und 10000, vorzugsweise zwischen 300 und 3000 liegt, wobei der Massengehalt an basischen stickstoffhaltigen Monomeren in der Verankerungskette mindestens 5% und vorzugsweise mindestens 30% beträgt,
(iv) 0 bis 80 Masse-%, vorzugsweise 0 bis 40 % von einem oder mehreren Monomer(en), das oder die mindestens eine Gruppe enthält bzw. enthalten, die an einer Kopplungsreaktion beteiligt sein kann,
mit der Maßgabe, daß, wenn einer der Massengehalte der unter i), ii) und/oder iii) definierten Verbindungen Null ist, der Massengehalt der unter iv) definierten Verbindungen von 0 verschieden ist, und
2) Pfropfen an diese vorab hergestellte Kette von:
v) 0 bis 90 Masse-%, vorzugsweise 0 bis 80 Masse-% von einem oder mehreren Telomer(en), angegeben durch die Formel
G-R₇
worin G für eine Gruppe steht, die ein reaktives Wasserstoffatom, -OH, -COOH, -SH, -NH₂, NHR''' (wobei R''' ein (C₁-C₃)-Alkylrest ist) enthält, und R₇ wie oben definiert ist, und
vi) 0 bis 80 Masse-%, vorzugsweise 0 bis 40 % von einem oder mehreren Telomer(en), angegeben durch die Formel:
G-R₉,
worin G und R₉ wie oben definiert sind,
ausführt,
mit der Maßgabe, daß:
- die Massengehalte der unter ii) und unter v) definierten Verbindungen nicht gleichzeitig 0 sein können und, wenn einer von diesen gleich 0 ist, der andere dann mindestens 10% ist,
- die Massengehalte der unter iii) und unter vi) definierten Verbindungen nicht gleichzeitig 0 sein können und, wenn einer von diesen gleich 0 ist, der andere dann mindestens 1% ist.

13. Verfahren nach einem der Ansprüche 10 bis 12, dadurch gekennzeichnet, daß die radikalische Copolymerisation bei einer Temperatur zwischen 50°C und 140°C und die Pfropfungsreaktion bei einer Temperatur zwischen 20°C und 150°C ausgeführt wird.

14. Verfahren nach einem der Ansprüche 10 bis 13, dadurch gekennzeichnet, daß die Reihenfolge der Zugabe der Monomere während der radikalischen Copolymerisation die folgende ist:
- die Makromonomere von höherer relativer Molekülmasse, und die aus diesem Grund weniger reaktiv sind, werden zu Beginn mit dem Lösemittel in den Reaktor eingebracht,
- das oder die höher reaktiven Comonomere, das oder die die Hauptkette bildet oder bilden, werden kontinuierlich im Verlauf der Zeit so eingespeist, daß deren Konzentration bezogen auf jene der Makromonomere stets niedrig ist.

15. Verfahren nach einem der Ansprüche 10 bis 14, dadurch gekennzeichnet, daß die radikalische Copolymerisation und/oder das Aufpfropfen von funktionalisierten Telomeren in Gegenwart eines Lösemittels oder einer Mischung von Lösemitteln, ausgewählt aus den aromatischen Kohlenwasserstoffen, den Ethern, den Ketonen und den Estern, vorzugsweise Dioxan, Tetrahydrofuran und Toluol, ausgeführt wird oder werden.

16. Zusammensetzung, die ein oder mehrere Copolymer(e) nach einem der Ansprüche 1 bis 9, mindestens ein Pigment und/oder einen Füllstoff und/oder einen faserartigen Feststoff und gegebenenfalls ein organisches Lösemittel oder Wasser enthält.

17. Pigment oder Füllstoff oder faserartiger Feststoff, umhüllt ausgehend von einer Zusammensetzung, die ein oder mehrere Copolymer(e) nach einem der Ansprüche 1 bis 9 enthält.

18. Anstrichmittel oder Tinte, das oder die ein oder mehrere Copolymer(e) nach einem der Ansprüche 1 bis 9 enthält.

19. Verwendung von einem oder mehreren Copolymer(en) nach einem der Ansprüche 1 bis 9 als Dispergiermittel für feste Teilchen in einem wäßrigen und/oder organischen Medium.

20. Verwendung von einem oder mehreren Copolymer(en) nach einem der Ansprüche 1 bis 9 als Stabilisierungsmittel für feste Teilchen in einem wäßrigen und/oder organischen Medium.

21. Verwendung von einem oder mehreren Copolymer(en) nach einem der Ansprüche 1 bis 9 als Emulgiermittel.

22. Verwendung nach einem der Ansprüche 19 bis 21 für die Herstellung von pigmenthaltigen Dispersionen in wäßrigem und/oder organischem Medium.
